# EUROPEAN PATENT SPECIFICATION

(11) **EP 1 541 219 B1**
(45) Date of publication and mention of the grant of the patent: **11.03.2009**
(21) Application number: 03104591.7
(22) Date of filing: 08.12.2003
(51) Int. Cl.: B01D 53/94, F01N 3/08

(54) **Method for removal of NOx and particulate matter**
Verfahren zur Entfernung von NOx und teilchenförmigem Material
Procédé pour l'élimination de NOx et de la matière particulaire

(43) Date of publication of application: 15.06.2005
(73) Proprietor: Ford Global Technologies, LLC, A subsidary of Ford Motor Company, Dearborn, MI 48126 (US)
(72) Inventor: Chigapov, Albert, 52072, Aachen (DE); Dubkov, Alexei, 52064, Aachen (DE); Carberry, Brendan, 52072, Aachen (DE)
(74) Representative: Drömer, Hans-Carsten

(56) References cited:
- EP-A- 0 491 360
- EP-A- 0 947 235
- EP-A- 1 356 864

## Description

The invention relates to a method for low-temperature NOx reduction. EP-1 356 864 describes a method for oxidising NO to NOx, followed by soot oxidation.

NOx reduction under lean conditions is very challenging problem for lean-burn gasoline and diesel engines due to the lack or shortage of gaseous reducing agents, e.g. CO and hydrocarbons for selective NOx conversion to occur. Two technologies are in development to meet this problem, namely SCR (selective catalytic reduction) using additional reductant like urea (ammonia) or hydrocarbons and NOx trap (sorbate) approach.

The SCR method allows to get a good NOx conversion using ammonia or urea, but it is complex and expensive, requires refilling of reductant, precise dosing and temperature control to avoid ammonia slip, and the reaction is accompanied by a huge amount of side products. The SCR with hydrocarbons, especially fuel, is more attractive, but has a lower conversion and lower selectivity towards nitrogen; N2O is a basic product at low temperatures. In the US 5 968 466 a catalyst with an additional Ag-Cu composition is described for use in such a method for reduction of NOx in a gas stream containing some reductant.

NOx sorbate or "trap" catalysts have achieved 80-90% reduction of NOx from lean exhaust streams using 1-2 minutes of NOx adsorption under lean conditions and NOx release and reduction under short periods of rich transient conditions for 1-10 seconds. Currently this method has a problem of deactivation due to the sulfur poisoning and requires the desulfation at high temperatures of 600-650°C under reducing conditions, that leads to high fuel penalty and thermal deactivation of the catalyst, so it is not possible to keep the initial high effectivity. It is very problematic to create a sulfur-tolerant NOx trap, because metal sulfates are thermodynamically more stable than nitrates. Those formulations are also very expensive due to the high Pt and typically Rh loading and require temperatures above 250°C for good NOx conversion.

The combination of a NOx storage catalyst and diesel particulate filter for simultaneous removal of nitrogen oxides and soot is e.g. known from DE 199 45 260 A1.

Generally, all mentioned methods require an additional gaseous reductant to reach stoichiometric or rich transient conditions for NOx reduction. The problem to get rich transients is very challenging and complicated for diesel engines. It is more difficult and leads to enormous fuel penalty to generate such transients due to the more lean conditions of diesel engines and higher amount of oxygen in comparison with lean-burn gasoline applications. This mode of operation is not proven yet for a long-time operation of a diesel engine. The amount of sulfur is also higher for diesel to use NOx trap technology.

The NOx removal without reductant is considered as impossible except as direct NO decomposition at high temperatures of typically 600-1000°C. Such temperatures are not realistic and require unrealistic fuel consumption for automotive applications.

Based on this situation it was an object of the present invention to provide alternative means for the cleaning of exhaust gases, especially exhaust gases of diesel engines and of lean-burn gasoline engines.

This task is solved by the method according to claim 1. Preferred embodiments are subject to the dependent claims.

The invention employs to a catalyst and adsorption composition for low-temperature NOx reduction without gaseous reductant, comprising silver (Ag) or an oxide thereof and at least one second metal oxide component.

As will be demonstrated below with respect to experimental results, such a composition surprisingly is able to remove NOx from exhaust gases at low temperatures and without the need for the addition of a gaseous reductant. Preferred embodiments of the composition, devices containing it, and methods using it will be described in the following.

Preferably the silver loading of that composition is from about 1 wt.% to about 40 wt.%, and/or the molar ratio of silver to the second metal oxide component is from 5/1 to 1/2.

Preferably the second metal oxide component of the composition is an oxide of a transition metal, especially of Co, Ni, Cu, Mn, Fe or Zn, or an oxide of Ce, Pr or Bi.

Most preferably the composition comprises the combinations Ag-Ce or Ag-Co-Ce.

Moreover the invention involves an aftertreatment device for exhaust gases, especially exhaust gases of diesel engines or lean-burn gasoline combustion engines. The aftertreatment device is characterized in that it comprises a composition of the kind mentioned above, i.e. comprising Ag or an oxide thereof and at least one second metal oxide component.

Preferably said composition of the aftertreatment device is deposited on a support, which may especially be alumina and/or mixed zirconia-alumina.

Preferably said composition of the aftertreatment device is applied to a substrate, which may especially be a monolithic substrate made from cordierite or SiC or to a diesel particulate filter.

Preferably the aftertreatment device is integrally or separately combined with other aftertreatment devices, preferably a diesel oxidation catalyst (DOC), an oxidation catalyst for lean-burn gasoline, an NOx trap, a diesel particulate filter (DPF) and/or a three-way catalyst (TWC) for gasoline aftertreatment.

Preferably the aftertreatment device comprises a separate device ("NOx accumulator") that contains said Ag composition, this NOx accumulator being combined with a diesel oxidation catalyst, a NOx trap and/or a diesel particulate filter located upstream and/or downstream of the NOx accumulator.

The invention is directed to a method for the low-temperature NOx reduction without gaseous reductant, the method comprising NO oxidation to NO2 with the help of a composition described above, i.e. comprising Ag or an oxide thereof and at least one second metal oxide component.

Preferably the method is carried out at a temperature of about 250°C to about 350°C.

Moreover the invention involves a method for the low-temperature NOx reduction without gaseous reductant, this method comprising the selective conversion of NO2 with the help of a composition described above, i.e. comprising Ag or an oxide thereof and at least one second metal oxide component. Preferably this method is combined with the method described above, i.e. with NO oxidation to N02 with the help of said composition.

Preferably the method is carried out at a temperature of about 20°C to about 200°C, most preferably of about 50°C to about 150°C. Thus two effects of the composition, namely NO oxidation to NO2 on the one hand and conversion of NO2 on the other, may be carried out with the same catalytic composition but at different temperature ranges.

When NO oxidation to NO2 and conversion of NO2 are combined, the converted N02 is preferably produced by said NO oxidation.

Preferably said composition is regenerated in air and/or in diesel exhaust at about 450°C to about 600°C. Thus the adsorption capacity of the composition can be used repeatedly.

According to a further development of the method, NOx and particulate matter are simultaneously removed. The particulate matter may especially be soot coming from a diesel engine.

Preferably soot oxidation is achieved in this case using NO2 release from said composition during desorption of adsorbed NOx as NO2, the desorption being preferably carried out at about 250°C to about 400°C.

Preferably NOx is adsorbed using said composition at low temperatures, preferably at about 20°C to about 200°C, and soot oxidation takes place on the same composition at about 250°C to about 400°C.

Moreover the invention involves a method for the removal of NO and NO2 from exhaust gas, characterized in that a composition described above, i.e. comprising Ag or an oxide thereof and at least one second metal oxide component, is used for NO and NO2 adsorption at low temperatures, preferably at about 20°C to about 350°C.

Preferably NO2 is released from said composition and consumed by an internal combustion engine, the release preferably taking place at about 250°C to about 450°C.

Moreover the invention involves the use of a composition described above, i.e. comprising Ag or an oxide thereof and at least one second metal oxide component, for low-temperature NOx reduction without gaseous reductant. This use may especially take place according to one of the methods described above.

In the following the invention is described by way of example with the help of the accompanying drawings in which:
- Fig. 1: shows NO2 adsorption at 50°C on a catalyst Ag-Co (12/1), 20wt.% Ag/ZrO2-Al2O3;
- Fig. 2: shows NO2 adsorption at 20°C on a catalyst Ag-Co (12/1), 20wt.% Ag/ZrO2-Al2O3;
- Fig. 3: shows NO2 adsorption at 150°C on a catalyst Ag-Co (12/1), 20wt.% Ag/ZrO2-Al2O3;
- Fig. 4: shows NO2 adsorption at 200°C on a catalyst Ag-Cu(1/1), 30% wt. Ag;
- Fig. 5: shows NOx desorption after NO2 adsorption at 150°C;
- Fig. 6: shows NO2 adsorption at 50°C on catalyst Ag-Co(1.2/1), 20 wt.% Ag/Al2O3 in the mixture NO2-O2-H2O-CO2;
- Fig. 7: shows NO2 adsorption at 50°C on catalyst Ag-Pr(1/1), 15 wt.% Ag/ZrO2-Al2O3 in the mixture NO2-H2O-CO2-O2;
- Fig. 8: shows adsorption at 50°C of mixture NO, NO2, H2O, CO2 and O2 on catalyst Ag-Pr(1/1), 15 wt.% Ag/ZrO2-Al2O3;
- Fig. 9: shows NOx desorption from catalyst Ag-Pr(1/1), 15 wt.% Ag/ZrO2- Al2O3 after adsorption at 50°C;
- Fig. 10: shows NO adsorption and oxidation at 150°C on catalyst Ag- Co(1.2/1), 20 wt.% Ag/Al2O3;
- Fig. 11: shows NO adsorption and oxidation at 220°C on catalyst Ag- Co(1.2/1), 20 wt.% Ag/Al2O3;
- Fig. 12.: shows NO adsorption and oxidation at 250°C on catalyst Ag- Co(1.2/1), 20 wt.% Ag/Al2O3;
- Fig. 13: shows NOx desorption after NO adsorption at 150°C, catalyst Ag- Co(1.2/1), 20 wt.% Ag/Al2O3;
- Fig. 14: shows NOx desorption after NO2 adsorption at 50°C on catalyst Ag- Co(1/2), 5 wt.% Ag;
- Fig. 15: shows soot oxidation on Ag_{0.75}Ce_{0.25} composition under O2-NO2 mixture;
- Fig. 16: shows pressure drop during soot loading, and
- Fig. 17: shows pressure drop at the end of the each temperature step during regeneration.

The invention relates to the new method of low temperature NOx reduction without gaseous reductant under absolutely lean conditions using the combination of silver with some transition metals (Co, Ni, Cu, Mn, Fe) or metal oxides of Ce, Pr or Bi as a catalyst-adsorbent. First step is NO oxidation to NO2 using this catalyst at 220-350°C. NO2 thus produced can be converted on the same catalyst from room temperature up to 200°C. These systems are also good adsorbents for NO and NO2 and release basically N02 during desorption. This NO2 released can be used for simultaneous soot removal. Engine testing of Ag-Ce and Ag-Ce-Co formulations deposited on diesel particulate filter revealed the good activity in soot oxidation and filter regeneration of such a system at 250-350°C using NOx emitted from engine.

### Experimental Examples

### A. Catalyst, core sample and catalyzed filter preparation

Core samples of 2,54 cm diameter × 7,62 cm length (1"×3") were used for NOx adsorption, desorption and conversion study.

Commercially available cordierite, preliminary coated with gamma-alumina was used for preparation of Ag and combined Ag- second metal oxide core samples. Core samples were cut from a cordierite monolith using diamond drills. Silver nitrate mixed with citric acid (1/1 molar ratio) in a distilled water solution was used for Ag only impregnation, the mixture of silver nitrate with second metal oxide, e.g. cobalt nitrate, iron nitrate, cerium nitrate etc. and citric acid (1/1 molar ration of citric acid to the total amount of Ag plus second nitrate) were applied to cordierite core samples for the preparation of mixed Ag-metal oxide compositions. All samples were dried overnight at 57°C in drying box with the following calcinations at 600°C in air for 3 hours.

For preparation of Ag/silica, Ag/zirconia and Ag/tin oxide, commercial silica sol, zirconia sol or tin oxide sol (Alfa) were used to coat cordierite with the following drying and calcinations at 600°C for 3 hours. Mixed alumina-zirconia coated cordierite was prepared by impregnation of alumina-coated cordierite with solution of zirconium acetate in diluted acetic acid with the following drying and final calcinations at 600°C for 3 h. We used commercial cordierite coated with ZSM-5 type zeolite for Ag/zeolite preparation.

The full-size diesel particulate filters were prepared by the following way:
CPF-15: The stabilized ceria with addition of Zr, Sm and Y was selected as base coating for commercial cordierite diesel particulate filter (14,4 cm diameter × 15,2 cm length (5.66" × 6"), cell density 200 cpsi (cells per square inch), wall thickness 0.3 mm (12 mil)). The cordierite substrate was impregnated with the solution of Ce nitrate, ZrO(NO3)2, Sm and Y nitrates in distilled water with addition of citric acid. After drying at 105°C the substrate was calcined at 600°C for 4h. Catalyst layer of the same composition but with addition of silver nitrate (Ag/Ce molar ratio 1/1) was applied to substrate: AgNO3 amount was selected as 68.5 g. After drying at room temperature overnight, the sample was dried at 105°C for 10h and calcined at 600°C for 4h.
CPF-19: NZP substrate (14,4 cm diameter × 15,2 cm length (5.66" × 6"), cell density 225 cpsi, wall thickness 0.28 mm (11 mil)) was used for filter preparation. One-step coating was performed with catalyst layer of Ag-Ce-Co (molar ratio Ag/Co/Ce= 0.31/0.81/1) with addition of Sm and Pr oxides for stabilization of ceria. Silver nitrate loading was 36.8 g. Silver, ceria, cobalt, samarium and praseodymium nitrates were dissolved in distilled water and were applied to the filter. After drying at 105°C overnight the substrate impregnated was calcined at 600°C for 4h.

### B. Testing of core samples for NOx adsorption and conversion

The core catalysts of 2,54 cm diameter × 7,62 cm length (1"×3") were tested in a laboratory-scale flow reactor with of corresponding size. An electric furnace was used to heat the reactor, the furnace being designed to carry out the linear increase of temperature for a temperature programmed desorption (TPD) study. The temperature was monitored by a thermocouple placed in the center of the catalyst. The change of thermocouple location from inlet to outlet of core sample revealed very small temperature difference.

A conventional flow setup was used for gas mixture preparation. All gases were of ultra high purity. The flow rates were controlled using mass flow controllers (MKS, Munich, Germany). To prevent water condensation, all connections were installed in a thermobox maintaining the constant temperature of 100°C. Reactor effluents were analyzed with a HP 6890A gas chromatograph, using Porapak Q and NaX packed columns. For instant NO and NO2 analysis, the Eco-Physics NOx analyzer was utilized.

### General test description:

The following tests have been performed over core samples
1. NO2 adsorption in NO2-O2-N2 mixture combined with NO2 temperature-programmed desorption (TPD) in 02-N2 mixture for all samples.
2. NO2 adsorption and desorption in NO2-O2-CO2-H2O-N2 mixture for selected samples.
3. NO adsorption in NO-O2-N2 mixture combined with TPD desorption in 02-N2 for selected samples.
4. Simultaneous NO plus N02 adsorption in NO-NO2-O2-N2 mixture coupled with desorption in O2-N2 mixture for selected samples.
5. NO2 adsorption in NO2-O2-CO2-H2O-N2 mixture with the following desorption in O2-CO2-H2O-N2 mixture for selected samples.
6. Simultaneous NO plus N02 adsorption in NO-NO2-O2-CO2-H2O-N2 mixture with the following desorption in O2-CO2-H2O-N2 mixture for selected samples.

### Detailed test description:

### 1. NO2 adsorption-desorption

1a. The measurement of total adsorption capacity of core samples (millimol (mmol/core sample) NO2 adsorbed) in the mixture of 550-600ppm NO2 in 10% (vol.) O2-N2 mixture at definite temperature was coupled with the measurement of adsorption capacity during retention time until break-through of NOx (NOx level higher 5 ppm). The concentrations of NO, NO2 and total NOx (NO+NO2) concentrations were measured using on-line NOx analyzer. The tests were performed at constant space velocity (GHSV) of 5000 hr⁻¹ (GHSV = Gas flow rate at 273 K and 1Bar in L/hr / catalyst volume in I). The test was carried out until NO2 concentration reached initial level. The inlet concentration of NO2 was analyzed from time to time to ensure the constant NO2 concentration in reaction mixture. For some samples the NO2 outlet concentration did not reach the initial level for a long time, in this case the sample was tested the definite selected time (3 hours, 6 hours, 12 hours). For some samples the appearance of NO was observed, in this case total NO plus NO2 concentration was taken into account and determined as NOx concentration.
1b. Adsorption isotherms were measured at 50, 150, 250, 350°C with final return to adsorption at 50°C after adsorption-desorption cycles. Three values were determined at every temperature, namely ACdif, measured as integral value of the difference between inlet and outlet NO2 (NO, NO plus NO2) concentration. This value included adsorbed and converted NO2. The second value ACz was evaluated at the amount of NOx adsorbed and converted during the retention time, when NOx concentration was less than 5 ppm. Accordingly, the retention (break-through) time Z (sec) was measured as a time when NOx concentration was less than 5 ppm until NOx concentration exceeded this level. For selected samples we tested the adsorption NO2 at additional temperatures: 20°C, 100°C, 200°C etc.
1c. Temperature-programmed desorption (TPD) study was performed after each adsorption experiment with temperature increase up to 600°C in 10% O2-N2 mixture with selected temperature ramp of 10°C/minute. For each sample the following values were evaluated: the number of desorption peaks; Tdes/C - the temperature of maximum of each separate desorption peak; ADdes, mmol- total amount of desorbed NOx; Sₙ- the ratio NO2 to NO at the temperature of maximum. The temperature ramp was carried out until 600°C, typically this temperature was enough (with some exceptions) to remove all adsorbed NOx species.
1 d. Kinetic curves of adsorption/conversion at definite temperature and temperature-programmed desorption (TPD) of NOx species were recorded for each core sample. The data on time and NO, NO2 and total NOx concentration were stored and extracted for adsorption experiment, and the same data plus temperature were registered for each desorption experiment.
1e. N2O analysis was carried out by collecting N2O in a cold trap at liquid nitrogen temperature with the following analysis by GC HP 6890A gas chromatograph, using Porapak Q and NaX packed columns.

### 2. NO2 adsorption-desorption in the presence of water and carbon dioxide.

The testing procedure was the same as for NO2 adsorption, see above, but adsorption was carried out in the reaction mixture of 550-600 ppm NO2, 9.5% O2, 5% CO2 a, 5% H2O, nitrogen as a balance, and TPD was carried out in the same mixture, but without NO2. To avoid water penetration to NOx analyzer line, the additional filters for water have been installed upstream of NOx analyzer line. Water was supplied through humidifier, and carbon dioxide was supplied using additional gas line.

### 3. NO adsorption in NO-O2-N2 mixture combined with TPD desorption in O2-N2

The test structure was the same as for NO2 adsorption-desorption cycles, but the reaction mixture for adsorption was as the following: 750 ppm NO, 10% O2, nitrogen as a balance. The reaction mixture for desorption was the same as for NO2 study, namely 10% O2 in nitrogen. For some samples the adsorption study was performed at additional temperatures within 50-350°C range. For all samples the NO concentration reached the initial level in contrast to NO2 adsorption.

### 4. Simultaneous NO plus N02 adsorption in NO-NO2-O2-N2 mixture coupled with desorption in O2-N2 mixture

The test features were the same as for NO2 adsorption-desorption, see 1a-1d, but the samples were exposed to the reaction mixture of 550 ppm NO2, 750 ppm NO, 9.5% O2, N2 as a balance during adsorption isotherm study, while desorption was studied in 10% O2-N2 mixture.

### 5. NO2 adsorption in NO2-O2-CO2-H2O-N2 mixture with the following desorption in O2-CO2-H2O-N2 mixture

The test structure and features were the same as for NO2 adsorption-desorption, see 1a-1d, but the samples were exposed to the reaction mixture of 550 ppm NO2, 9.5% 02, 5% H2O, 5% CO2, N2 as a balance during adsorption. The desorption was studied using the mixture of 9.5% 02, 5% H2O, 5% CO2, N2 as a balance.

### 6. Simultaneous NO plus NO2 adsorption in NO-NO2-O2-CO2-H2O-N2 mixture with the following desorption in O2-CO2-H2O-N2 mixture

The test structure and features were the same as for section 4, but with addition of 5% H2O and 5% CO2 to the mixture for adsorption and desorption.

### C. Testing of soot oxidation using TGA method

The powder samples were tested using Cahn 2000 TG (thermo gravimetric analyzer) operating in a flow mode. A powdered or "as prepared" catalyst sample was mixed (loose contact) by spatula with fresh diesel soot in ratio of 5/4, typically 25 mg of catalyst to 20 mg of Diesel soot placed into the TGA reactor, and exposed at different temperatures (200-600°C) to gas flow (50 cc/min) containing: 10% O2-N2; 1000 ppm NO2-N2; or 10% O2 - 1000 ppm NO2-N2. Experiments were performed using a setup based on the Cahn 2000 microbalance. Helium UHP (100 sccm) was used to purge the microbalance chamber.

A conventional flow setup was used for gas mixture preparation. All gases were of ultra high purity or certified calibration mixtures. Nitrogen and oxygen were additionally purified using standard columns with molecular sieves. The flow rates were controlled using Matheson MF Controllers.

To evaluate the activity of catalysts in soot oxidation at low temperatures, two gas mixtures fed to the soot/catalyst were selected. So as Diesel exhaust contains NO, which converted to NO2 on Diesel oxidation catalyst, and NO2 is active in soot oxidation, the first mixture contained 1010 ppm NO2 and 10% O2 in nitrogen, modeling Diesel exhaust, the second mixture contained only 10% O2 in nitrogen. The catalyst powder and soot were mixed by spatula imitating the so-called "loose contact", which is typical for soot oxidation on particular filter.

### D. Testing and evaluation of soot oxidation on engine

The sample filters were tested on an engine dynamometer with a Ford Lynx 1.8L engine equipped with a commercial DOC (diesel oxidation catalyst) in a close-coupled position. Stage III and Stage IV fuels were used for comparative tests. The commercial Pt-coated DPFs with Pt loading of 100g per cubic feet was tested as reference DPF.

The traditional "balance point" test approach was used for evaluation of the regeneration capability of the prepared and reference DPF samples. Test protocol included high-temperature cleaning of the DPF at 3000 rpm/160 Nm (425 +/-25°C; 230 kg/hr); soot loading at 2500 rpm/50 Nm (225°C, 160 +/- 20 kg/hr, soot rate loading ca. 4 g/hr, EGR on); regeneration at 2000 rpm and load increased by steps from 30 to 150 Nm to get pre-DPF temperature increase with 25°C steps from 200 to 450°C holding 15 min at each temperature; all stages described above were performed with switched off EGR.

### E. Results

Preliminary was studied the adsorption of NO (700-750ppm), N02 (500-550ppm), mixture NO-NO2 and the same compositions with addition of water (5%) and CO2 (5%) in the presence of 10% of O2 over a different adsorbents. The temperature of adsorption varied within 50-350°C with the following desorption of NOx in the presence of oxygen up to 600°C.

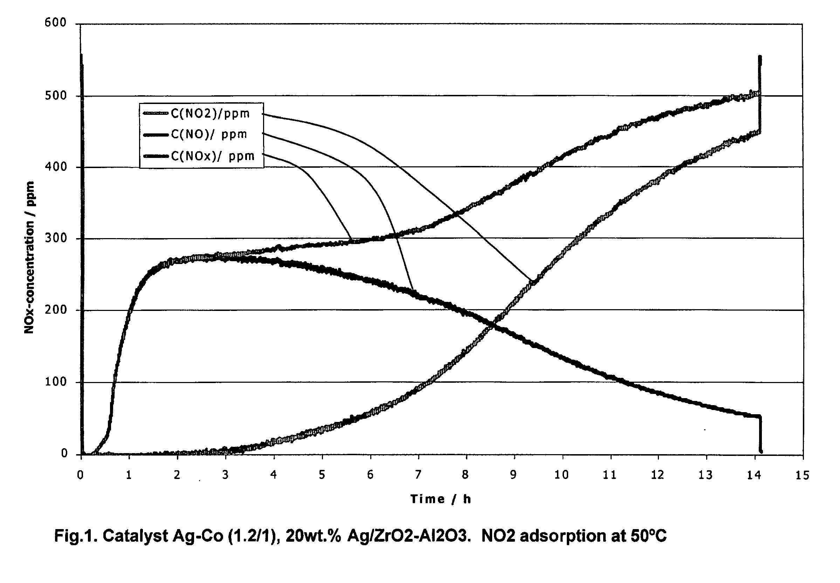

Surprisingly it was found some NO2 reduction using the silver catalyst or better the combination of silver with some transition metals even at room temperature without any reductant. One can see on Figure 1 the typical behavior of such a catalyst (Ag-Co (1.2/1), 20wt.% Ag on ZrO2-Al2O3) at 50°C and GHSV of 5000 hr⁻¹. The conversion is accompanied by NO2 adsorption. Adsorption is usually complete within 1-3 hours, there is no further significant increase in adsorbed amount of NOx on the catalyst, while conversion continues, as the result the total NOx concentration is significantly lower than initial NO2 concentration. One can see that some reduction of NO2 occurs, it is clear due to the appearance of NO, which was not presented in the reaction mixture. Simultaneously with reduction to NO more deep reduction occurs, because we found that the total amount of adsorbed NOx and outlet NOx is lower than inlet NO2 amount, as can be seen in the accompanying Tables 1 and 2. The products of selective reduction can be N2O and (or) nitrogen. There was not found any significant increase of small N2O amount presented in reaction mixture, so this selective conversion should be basically with NO2 conversion to nitrogen. Both processes of NO2 reduction are parallel, because it was not observed any significant NO conversion under the same conditions, it shows that NO is not an intermediate product of reduction with the following conversion to selective reduction products. This is a quite interesting and unusual reduction, there was not any reductant at all. This reduction is possible only due to the exclusive metallic properties of silver. The silver oxide is very unstable, less stable than any other oxide including platinum-group metal oxides. For well-dispersed silver the decomposition of silver oxide Ag2O to silver is starting at 160°C and oxygen pressure reaches 1 atm (bar) already at 185-190°C (G. Remi, Inorganic Chemistry, IIL, Moscow 1963, v.2 p.427).

In the presence of NO2 the oxidation of silver leads to the formation of the mixture of silver oxide, silver nitrate and silver nitrite with the following processes:

NO2 + nAg → NO + Ag2O + AgNO2 + AgNO3

2NO2 + nAg → N2 + Ag2O + AgNO2 + AgNO3

So the reduction is only possible for the account of silver oxidation and occurs until all silver will be oxidized. It explains the reduction without gaseous reductant for this catalytic system. On the other hand, it is easy to convert silver oxide and silver nitrite and nitrate to metallic silver at temperatures below 450°C without any reductant in the presence of oxygen, so the NOx reduction can be carried out in a cycle with the silver regeneration after NOx reduction without any reducing agent.

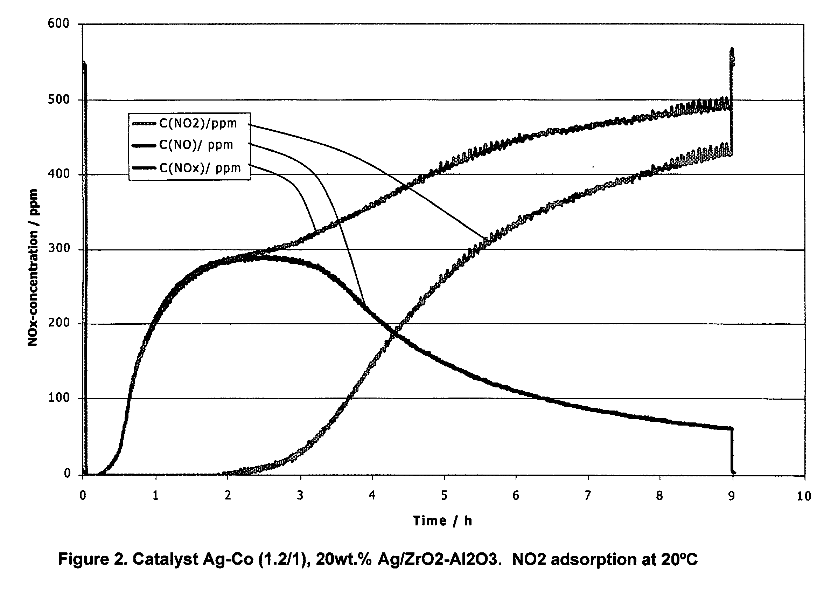

The NO2 concentration was within the range of 550-600 ppm, higher than typical for diesel engine conditions for modem diesel engines. Under such conditions the catalyst can effectively work for many hours however due to the slow silver oxidation, one can see on Figure 1, that NOx concentration was still lower (500 ppm) than inlet NO2 concentration 550 ppm after more than 14 hours of reaction, the total amount of NO2 passed was 68.64 mmol, the difference between inlet NO2 and outlet NOx was 26.54 mmol, but only 6.31 mmol of NOx was desorbed during desorption. So the converted amount of NOx can be calculated as (26.54-6.31)mmol = 20.23 mmol, and NO2 conversion as 20.23/68.64 = 29.5% (integral value for 14 hours). The catalyst is active even at room temperature, the conversion was found at 20°C, with NO2 selective conversion of 23% for 9 hours, as shown in Figure 2. The decrease of activity is accompanied with lower conversion of NO2 to NO, as shown on Fig. 1 and Fig. 2, it leads to increase in NO2 concentration and decrease of NO concentration and indicates the decrease of reduction properties of catalyst with time on stream.

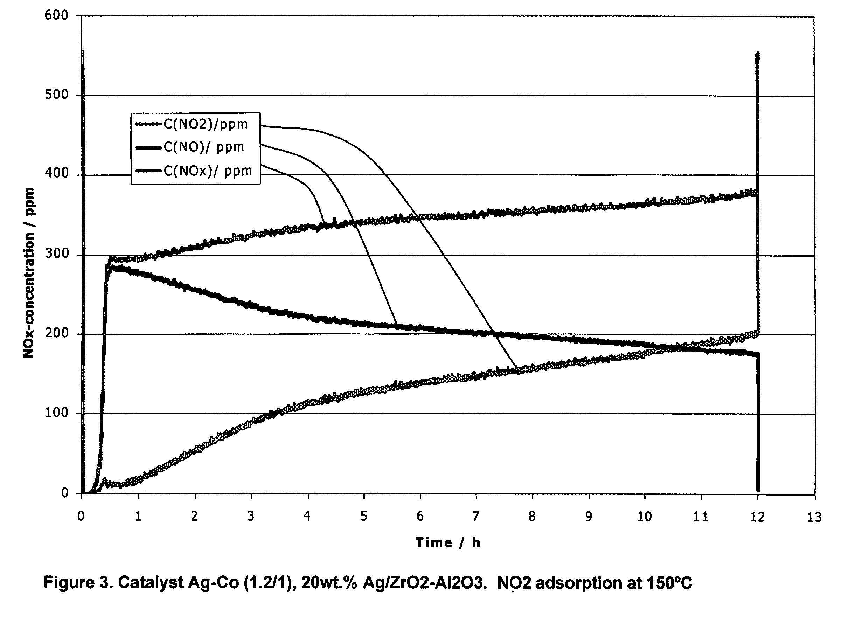

The decrease of catalytic activity is slow at 150°C however, as presented on Figure 3, probably due to the starting decomposition of silver oxide. After 12 hours on stream the outlet NOx concentration was only 380 ppm in comparison with inlet 555 ppm NO2 concentration, with NO2 selective conversion of 29% on the same catalyst. Generally, such systems can convert N02 from room temperature up to 200°C, the conversion at 200°C is only 5-12%.

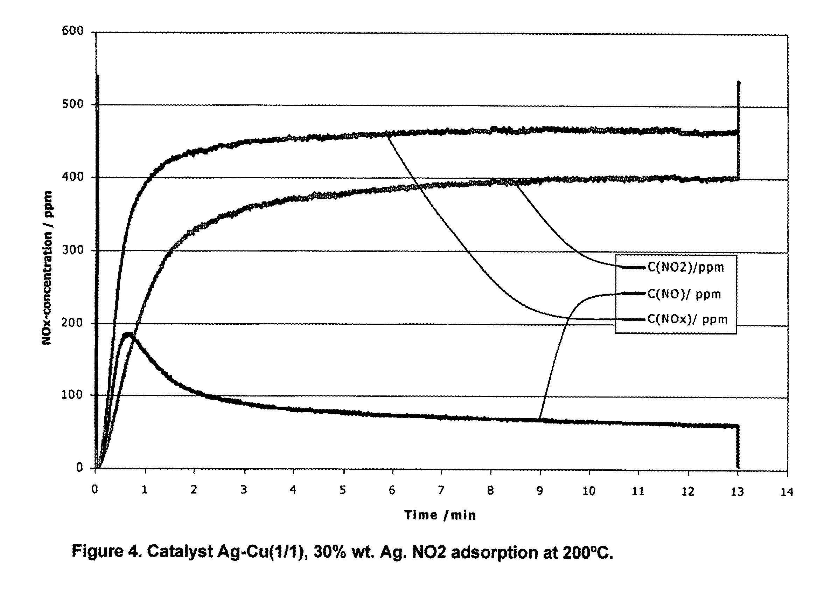

One can see on Figure 4 the behavior of an Ag-Cu (1/1) catalyst, 30 wt% Ag /Al2O3 at 200°C with NO2 conversion of 11.4% for 12 hours. No NO2 conversion was observed at higher temperatures, only adsorption of N02 at 220-350°C.

The NO2 adsorption was also lower at higher temperatures (250°C and 350°C), as shown in Table 3. Complete adsorption and desorption data are presented in this Table 3. All adsorbed NOx species can be completely removed at T < 450°C.

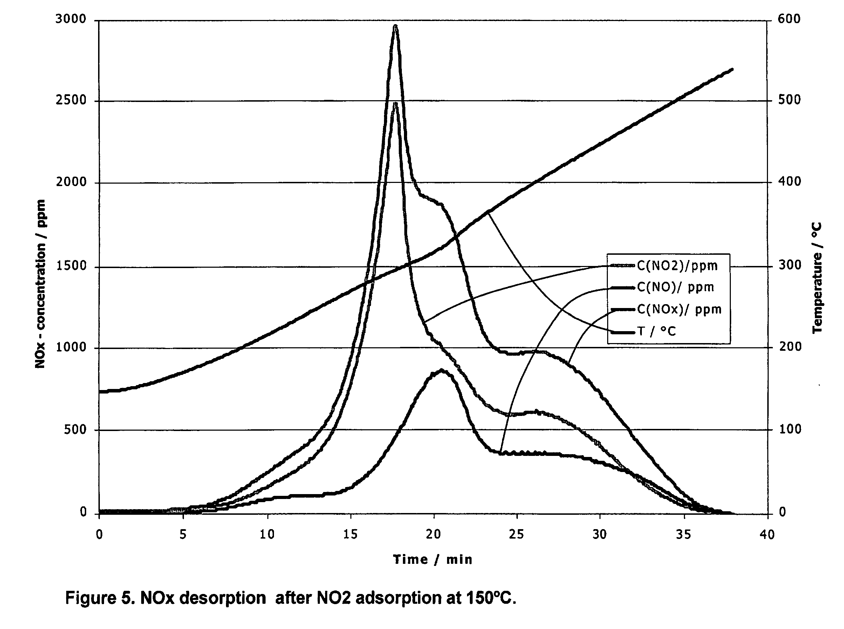

Desorption of adsorbed NOx after NO2 adsorption is shown on Figure 5. The catalyst can be completely regenerated simply by raising temperature up to 450°C, and it is possible to carry out many cycles of adsorption-conversion and following desorption. It could not be found any deterioration of catalyst activity after consecutive adsorption-desorption cycles, see Table 3, but it was found even some improvement, especially the retention time (time of complete removal of NOx, when NOx concentration was lower 5ppm) increased, and adsorption capacity and NO2 conversion too, Table 3.

So the NO2 conversion can be done without any gaseous reductant with NO2 adsorption and conversion at room temperature - 200°C and following desorption at higher temperatures. Regarding diesel engine, NO2 can be converted and adsorbed at low-speed driving and than the catalyst can be regenerated in passive mode during high-speed driving or regeneration can be done by different methods of raising temperature of diesel exhaust (throttling, post-injection etc).

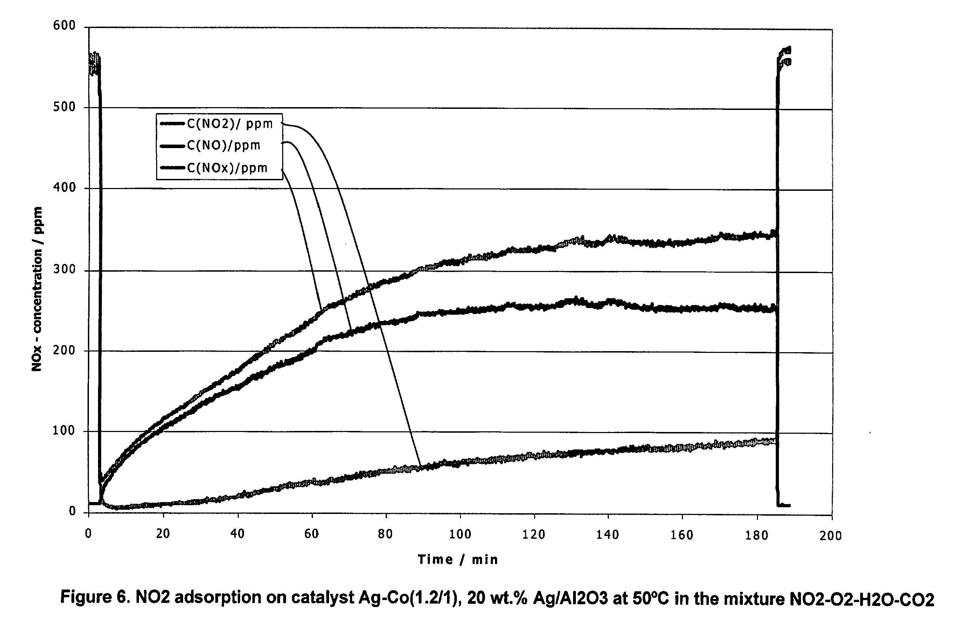

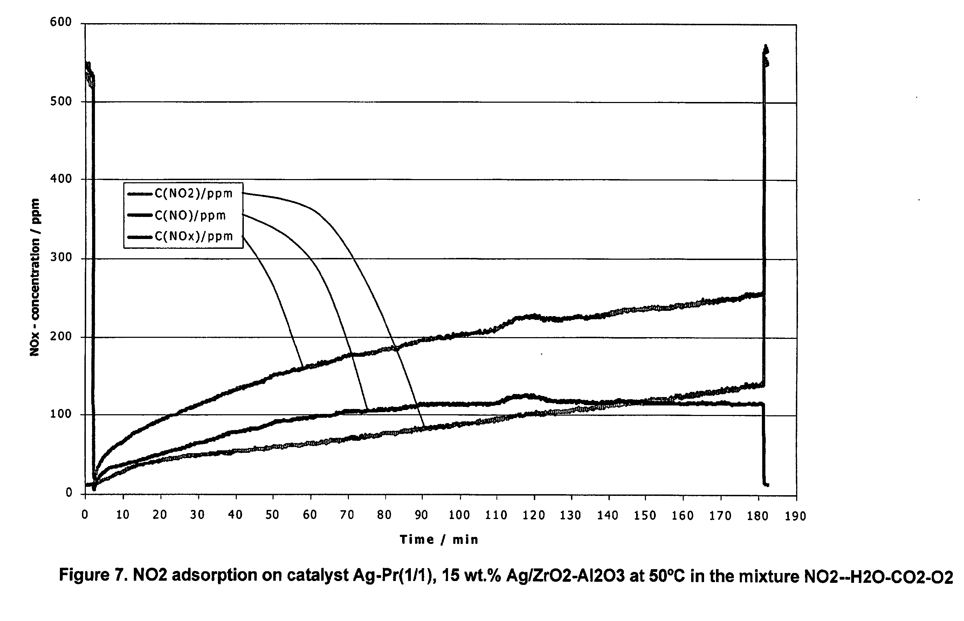

Diesel exhaust always contains water and carbon dioxide CO2. Some selected catalysts in NO2-H2O-CO2 mixtures imitating diesel exhaust were tested, see Figures 6-9 and Tables 4.1-4.4 and 5.1-5.2. Water and carbon dioxide are not strongly competing with NOx for the adsorption centers in contrast to NOx trap materials. For example for a Ag-Co catalyst, adsorption capacity in the presence and in the absence of H2O and CO2 was comparable, see Tables 4.1-4-4. It is interesting that for the Ag-Pr combination on alumina-zirconia, the presence of water and CO2 even improves its adsorption properties, as presented in Tables 5.1-5.2, and this catalyst revealed better performance in comparison with Ag-Co catalyst in the presence of water and carbon dioxide, as shown on Figure 7 and in Tables 5.1-5.2 The outlet NOx concentration was only 255 ppm after 3 hours at 50°C, while inlet NO2 concentration was 565 ppm.

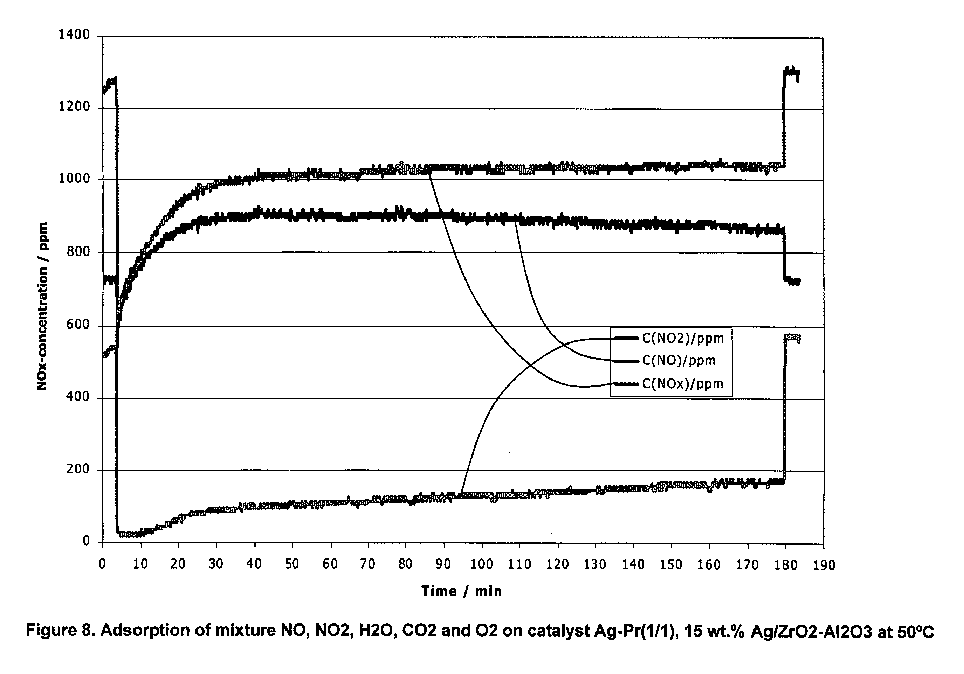

The Ag-Pr catalyst was still active in the complete mixture imitating diesel exhaust, containing NO, NO2, CO2 and water, as one can see on Fig. 8. The outlet NOx concentration was only 1030 ppm after 3 hours on-stream, while inlet NOx concentration was 1280 ppm (730 ppm NO and 550 ppm NO2) at 50°C and GHSV of 5000 hr⁻¹ on Ag-Pr catalyst, Ag-Co catalyst showed similar activity at 50°C. The big concentrations of NO in the presence of water and carbon dioxide suppress the activity of Ag-Co catalyst at 150°C, however, Table 4.2. In contrast, Ag-Pr catalyst even had better performance for NO2 conversion in the presence of NO, CO2 and H2O than when only NO2 was passed through catalyst at 50°C, and had better performance at 150°C for complete mixture, Tables 5.1 and 5.2.

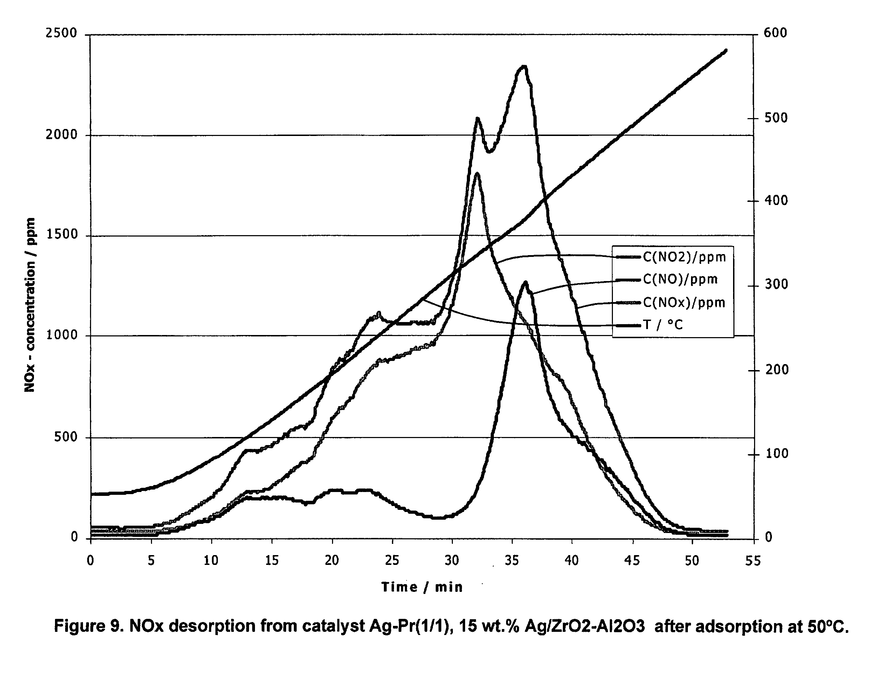

Basically NO2 was released from this Ag-Pr catalyst during desorption after NOx adsorption in a complete mixture imitating diesel exhaust (NO-NO2-CO2-H2O-O2), as shown on Figure 9.

The behavior of Ag-Co catalyst under different mixtures is presented in Tables 4.1-4.3, Ag-Pr catalyst properties are presented in Tables 5.1-5.2

On the other hand, the diesel exhaust contains basically NO and only a small fraction of NO2. As mentioned above, the catalysts tested are not active in selective NO conversion, the difference between inlet and total outlet plus desorbed amount did not exceed 5% during NO adsorption. So for the effective conversion of NOx emissions from the diesel engine the oxidation of NO to NO2 should be preliminary done upstream of such a catalyst. For this oxidation, the commercial diesel oxidation catalyst, designed for NO oxidation may be installed upstream of the catalyst presented in this invention. But the interesting feature of the catalyst of the present invention was found, namely that it becomes very active itself in NO oxidation to NO2 when temperature exceeds 200°C.

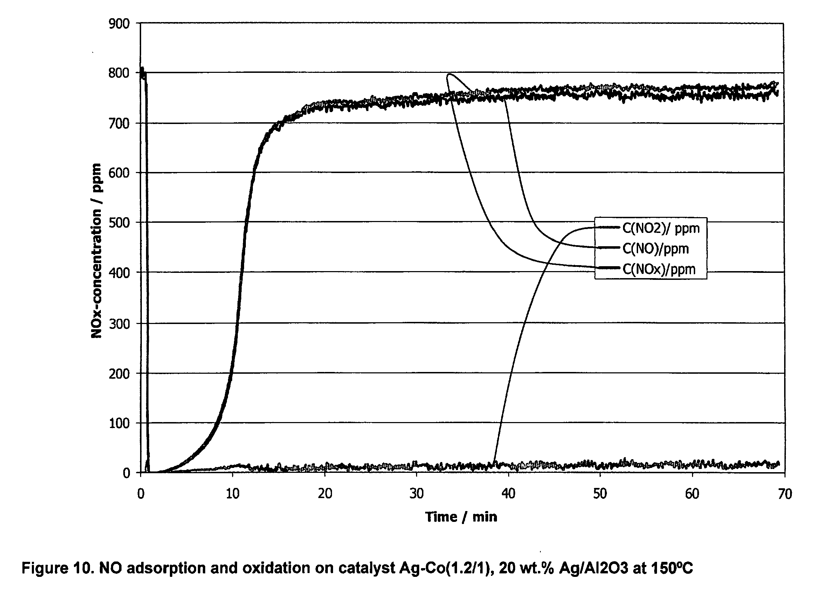

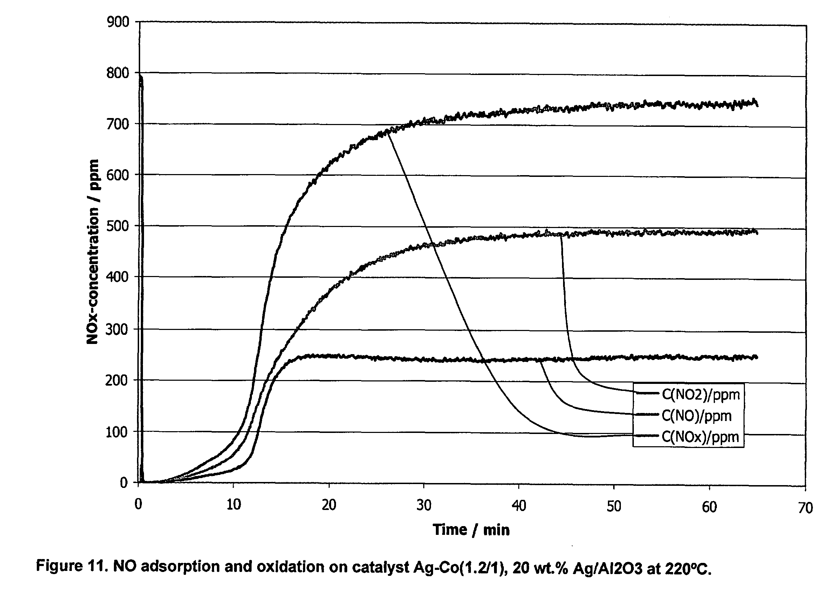

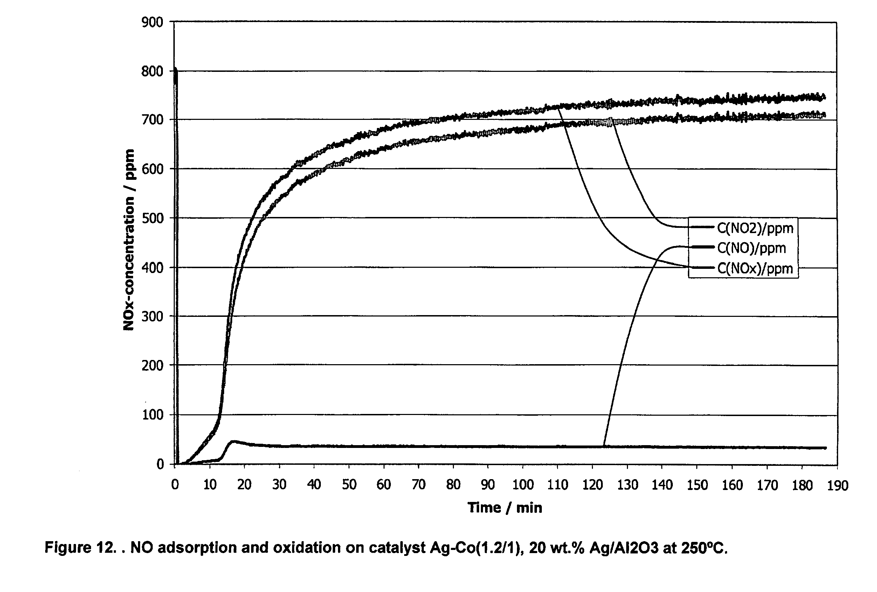

From Figure 10 it is clear that the catalyst has no NO oxidation activity and only can adsorb NO at 150°C. As one can see on Figures 11 and 12, NO oxidation occurs at 220°C, and the catalyst can practically completely convert NO to NO2 at 250°C up to the thermodynamic equilibrium level. The conversion was lower at 350°C due to the thermodynamic limitations. Those catalysts of this invention are also good adsorbents for NO, though adsorption capacity is lower in comparison with NO2. The NO adsorption capacity was 1.5-1.7 mmol/core sample at 50-200°C for Ag-Co (1.2/1), 20wt%Ag catalyst, but increased to 1.9 mmol at 220°C and 3.9 mmol at 250°C due to the NO oxidation, so the mixture of NO and NO2 was really adsorbed under these temperatures, Tables 4. At 350°C the adsorption capacity decreased again due to the intensive desorption of both NOx species.

It is obvious from these features that silver-based catalytic systems change their properties from reductive to oxidative near 200°C, being active up to 200°C in NO2 reduction and active in NO oxidation above 200°C.

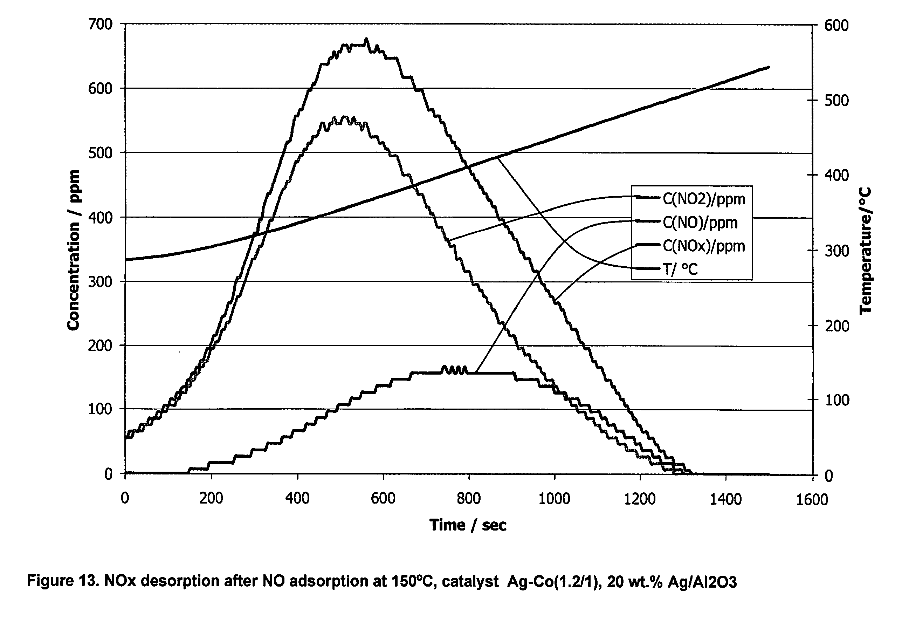

Those features allow to carry out the two-stage process of NO oxidation to NO2 and following NO2 removal using the same catalyst, e.g. Ag-Co, but maintaining it at different temperatures. The first part of catalyst can effectively oxidize NO to NO2 at 250-300°C, while the second part downstream can convert NO2 at temperatures from room to 200°C. The good adsorption properties also allow the other possible way, because these catalysts, especially with low silver loading, release basically NO2 after NO adsorption, so the systems can oxidize adsorbed NO to NO2 with increasing temperature and release it as NO2. As shown on Fig. 13, after NO adsorption at 150°C the amount NO2 released was near 7 times higher than amount of NO released during desorption. The same picture was observed for other adsorption temperatures, except 50°C, where some amount of NO was released at 100-130°C.

After NO2 adsorption, also basically NO2 was released as shown on Figures 5, 9 and 14.

So the other possible way is to maintain the first part of such a catalyst at low temperatures until NOx adsorption saturation with the following temperature ramp to 250-400°C to release it as NO2 to second part of the catalyst for NO2 consumption. This method is more energy efficient.

The compositions can be deposited on a separate device (or devices), called "NOx accumulator", e.g. deposited on a monolithic substrate made of cordierite, SiC or other material. This device can provide some passive NOx reduction, but its effectivity can be improved using an active control strategy to maintain the temperature necessary for good NOx adsorption and reduction and catalyst regeneration. On the other hand, those compositions can be applied to diesel oxidation catalyst, NOx trap, diesel particulate filter or other aftertreatment devices to improve their performance. For example, the catalysts-adsorbents can be used for NOx accumulation with the following NO2 return to engine for consumption using for example an EGR valve installed before DPF. The catalysts-adsorbents of the present invention can also be combined with an NOx trap or conventional TWC (three-way catalyst) to improve their performance.

The property of the catalysts-adsorbents of this invention to release basically NO2 after NOx adsorption can be used for simultaneous removal of NOx and particular matter, as it will be described below.

Regarding catalyst composition, the presence of silver is of basic importance, because only silver can reduce NO2 due to its metallic property, the testing with the second metal oxide component did not reveal any NO2 reduction. But the second component is also very important, because pure silver can effectively reduce NO2 only at a high concentration of silver (35 wt.%) that is not practical. The second component is able not only to reduce the silver loading, but also improve the performance in comparison with any only silver composition, especially at 150°C. As an example, Ag-Co catalyst with 5 wt.% Ag loading gives practically the same activity as catalyst with 35 wt.% only silver loading, while Ag-Co with 20 wt.% Ag has better performance in comparison with any pure silver catalyst, as one can see in Tables 1 and 2.

Among the second component tested, the best performance was found for combination of Ag with transition metal oxides of Co (cobalt), Ni, Cu, Mn , Zn and Fe, and Ag combination with Ce, Pr and Bi from other metal oxides. The effect of Co and Ni was the best on catalyst performance, but silver combination with Pr was more effective in the presence of water and CO2, as was mentioned above. For Ag-Co (20wt%Ag) composition the NO2 conversion reached 34% and for Ag-Ni 30% as shown in Table 1, and 30% and 29% at 150°C correspondingly, Table 2, while for 35 wt.% of pure Aglalumina only 24% and 22%. The addition of Mn has revealed 32% NO2 conversion at 50°C, but this composition was less active at 150°C. From transition metals tested, only Cr deteriorated silver activity. The most of non-transition metals suppress the silver activity, except Ce, Pr and Bi. Acid oxides (silica, boria, zeolites) and strongly basic oxides, especially Ba, Sr and La, practically completely suppressed the activity in NO2 reduction, though NOx adsorption properties improved with Ba and Sr addition, especially with Ba, see Table 1 and 2. The decrease of activity was less pronounced with less basic oxides like MgO, Y2O3, SnO2, ZrO2. Among the supports studied, alumina and mixed zirconia-alumina were found to be good supports for silver-based compositions.

The role of the second component is not quite clear, but the same oxides that are active in silver-metal oxides combinations, are active in silver oxide decomposition (O.V. Krylov. Catalysis by non-metals, Chemistry, Leningrad, 1967), so probably silver can be more stable in the metallic state in the presence of such metal oxides, especially at 150°C. From the other point, such elements may improve the selectivity to desirable product for the account of NO for two parallel processes of reduction.

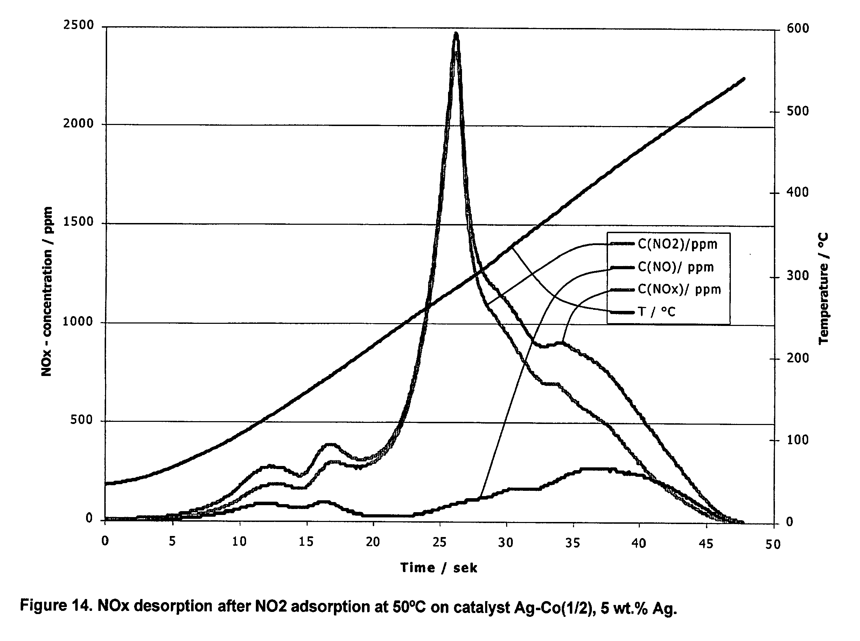

The ratio of Ag/second component can be varied from 5/1 to 1/2, the high loading of second component usually decreases the activity. The silver loading can be varied from 1 to 40wt.%, preferably 5-20wt.%. The lower silver loading usually led to decreased adsorption capacity, but often kept the same level of NO2 conversion. The time of effective catalyst work decreased however due to the lower silver concentration. We can take into account the lower cost of low-silver compositions on the other hand. In addition, those compositions have the valuable property to release practically only NO2 during desorption, as one can see on Figure 14. This property is very valuable for soot oxidation, because only NO2 is able to oxidize soot at low temperatures.

The compositions presented in this application are active in soot oxidation in the presence of NO2 and can be used for simultaneous removal of NOx and particulate matter (soot) from diesel engine.

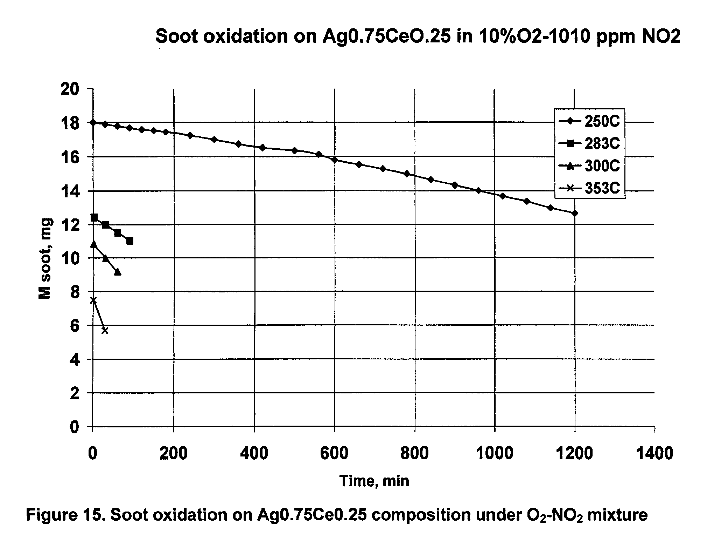

The TGA study revealed that powder compositions of silver with Cu, Mn, Fe, Co, Pr and Ce are quite active in soot oxidation at low temperatures in the presence of oxygen and NO2, especially Ag-Co and Ag-Ce compositions. The oxidation of soot in the presence of NO2 and O2 is presented on Figure 15 for Ag/Ce composition. The soot oxidation is quite noticeable at 250°C and is accelerated at higher temperatures.

The compositions can be deposited on a separate device (NOx accumulator) to collect NOx at low temperatures and to release NO2 at temperatures of 250-400°C for oxidation of soot collected on particulate filter, but may also be deposited directly on diesel particulate filter.

Full-size particulate filters were prepared to evaluate this possibility with Ag-Ce and Ag-Co-Ce compositions and soot oxidation was studied under real conditions using a Ford engine.

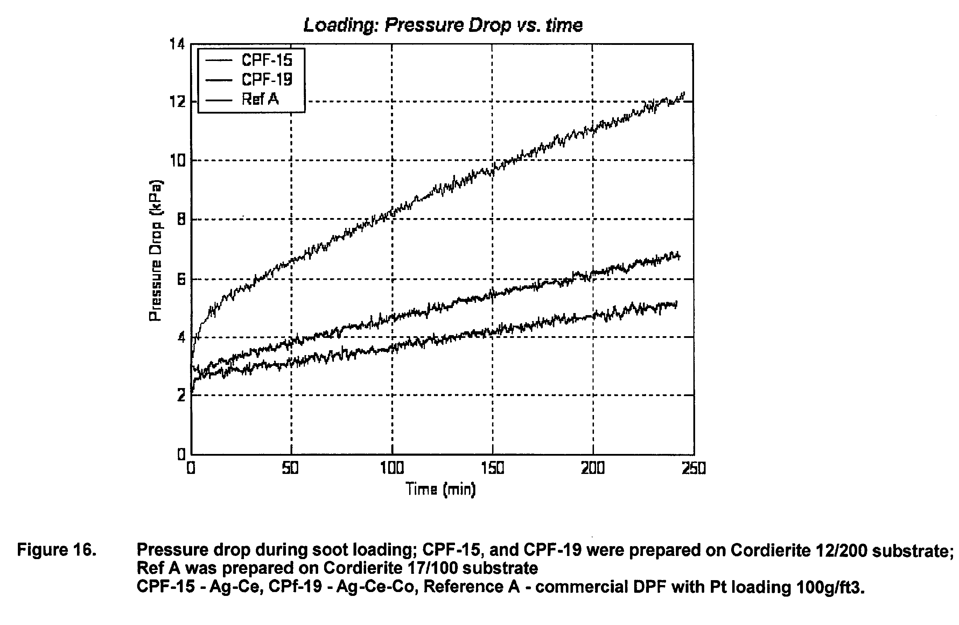

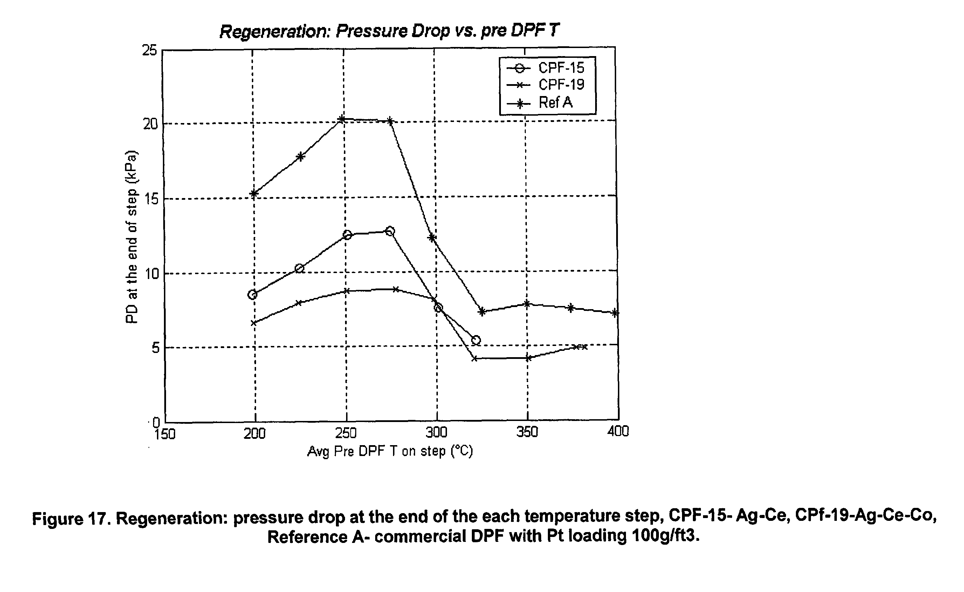

The filters with these compositions revealed better properties than commercial Pt coated catalyst during loading (Figure 16) and regeneration (Figure 17). So as soot loading was carried out at 225°C, some slow soot oxidation may occur already at this temperature, we found the balance point (point where was no further increase of delta P of filter, because soot accumulation and soot oxidation have the equal rates) at 275°C for Ag-Ce and at 250°C for Ag-Co-Ce compositions. The soot collected was completely removed at 325°C, as one can see on Figure 17.

So the compositions presented in this application can be in service also for simultaneous removal of soot and NOx reduction, especially Ag-Ce and Ag-Co or a mixture thereof. As mentioned before, such formulations may be used as separate device (NOx accumulator) installed upstream of a diesel particulate filter (DPF). Such NOx accumulator will collect NOx emitted from engine at low temperatures, while DPF will simultaneously collect soot. Then this accumulator will release basically NO2 to the filter downstream for NO2 consumption with soot deposited on filter at 250-350°C with filter regeneration due to the soot oxidation by NO2. On the other hand, the formulations of the present invention can be deposited directly on a filter with the same function.

In summary, catalysts-adsorbents were found and further a method for low-temperature NOx reduction without any gaseous reduction agent for diesel and lean-bum gasoline aftertreatment with NO oxidation to NO2 at 250-350°C and NO2 selective reduction on the same catalyst from room temperature to 200°C. Raising temperature to 450°C in the presence of oxygen can regenerate the catalysts. The catalysts-adsorbents of the present invention are combinations of silver (1-40 wt.%, preferably 5-20%) with transition metals of Co, Ni, Cu, Mn, Fe, Zn or oxides of Ce, Pr and Bi with Ag/second metal oxide molar ratio from 5/1 to 1/2. The same compositions revealed good adsorption properties for NO and NO2 and basically release NO2 during desorption. The same compositions, especially Ag-Ce and Ag-Co-Ce, are active in soot oxidation at 250-350°C in the presence of NOx and can be used for simultaneous removal of NOx and particulate matter. The compositions of this invention can be in service as separate device (NOx accumulator) or may be deposited on other aftertreatment devices, especially on diesel particulate filters.

**Table 1: NO2-adsorption /conversion on core samples at Tads = 50°C, NO2 in 10%O2, N2 as balance, GHSV=5000 hr⁻¹**

| Catalyst | CNO2 in / (ppm) | t ads / h | AC in / mmol | AC dif mmol | AD des / mmol | Δ AC / mmol | Conversion / % | CNOx out / (ppm) | Δ C (Ppm) |
|---|---|---|---|---|---|---|---|---|---|
| 10%Ag/Al2O3 | 557 | 5,6 | 26,82 | 9,70 | 4,68 | 5,03 | 19 | 487 | 70 |
| 20%Ag/Al2O3 | 558 | 3,0 | 14,35 | 7,83 | 4,46 | 3,37 | 23 | 315 | 243 |
| 35%Ag/Al2O3 | 575 | 3,0 | 14,78 | 8,46 | 4,95 | 3,51 | 24 | 326 | 249 |
| 20%Ag/SiO2 | 545 | 0,83 | 3,87 | 0,61 | 0,64 | 0 | 0 | 535 | 10 |
| 20%Ag-Co (1.2/1)/Al2O3 | 570 | 6,0 | 29,50 | 16,72 | 6,77 | 9,95 | 34 | 310 | 260 |
| 20%Ag-Co (1.2/1)Zr-Al2O3 | 550 | 14,12 | 68,64 | 26,54 | 6,31 | 20,23 | 29.5 | 505 | 45 |
| 10%Ag-Co (1/1)/Al2O3 | 570 | 3,0 | 15,11 | 9,10 | 5,17 | 3,93 | 26 | 333 | 237 |
| 5%Ag-Co (1/1)/Al2O3 | 570 | 3,0 | 15,11 | 7,51 | 3,76 | 3,75 | 25 | 465 | 105 |
| 2.5%Ag-Co (1/1)/Al2O3 | 560 | 2,25 | 11,13 | 4,95 | 3,20 | 1,75 | 15 | 550 | 10 |
| 20%Ag-Ni (2/1)/Al2O3 | 575 | 3,0 | 14,78 | 8,96 | 4,47 | 4,49 | 30 | 300 | 275 |
| 20%Ag-Mn (1/1)/Al2O3 | 560 | 3,0 | 14,35 | 7,89 | 3,32 | 4,57 | 32 | 310 | 250 |
| 20%Ag-Zn (1/1)/Al2O3 | 585 | 3,0 | 15,04 | 8,45 | 4,57 | 3,88 | 26 | 350 | 285 |
| 30%Ag-Cu (1/1)/Al2O3 | 570 | 4,64 | 22,67 | 11,5 | 5,41 | 6,09 | 27 | 358 | 212 |
| 10%Ag-Cu (1/1)/Al2O3 | 560 | 3,0 | 14,40 | 7,54 | 3,72 | 3,82 | 26 | 377 | 183 |
| 20%Ag-Fe ((2/1)/Zr-Al2O3 | 575 | 3,02 | 15,21 | 9,66 | 5,73 | 3,93 | 26 | 310 | 265 |
| 20%Ag-Ce (2/1)/Al2O3 | 585 | 3,05 | 15,63 | 9,62 | 5,18 | 4,44 | 28 | 333 | 252 |
| 20%Ag-Ce (1/2)/Al2O3 | 585 | 3,0 | 15,04 | 5,60 | 3,77 | 1,83 | 12 | 510 | 75 |
| 15%Ag-Pr (1/1)Zr-Al2O3 | 555 | 3,05 | 14,62 | 6,78 | 4,99 | 1,79 | 12 | 470 | 85 |
| 20%Ag-Bi(3/1)Al2O3 | 585 | 3,01 | 15,42 | 8,41 | 4,26 | 4,15 | 27 | 295 | 290 |
| 20%Ag-ZrO2 | 550 | 2,0 | 9,43 | 3,06 | 2,31 | 0,75 | 8 | 461 | 89 |
| 20%Ag-Sn (2/1)/Al2O3 | 560 | 3,0 | 14,40 | 6,10 | 5,41 | 0,69 | 5 | 470 | 90 |
| 20%Ag-Ba (2/1)/Zr-A1203 | 570 | 3,0 | 14,66 | 7,83 | 7,11 | 0,72 | 5 | 345 | 225 |

**Table 2: NO2-adsorption /conversion for core samples at Tads =150°C, N02 in 10%02, N2 as balance, GHSV=5000 hr⁻¹**

| Catalyst | CNO2 in / (ppm) | t ads / h | AC in / mmol | ACdif / mmol | AD des / mmol | Δ AC / mmol | Conversion / % | C_{NOx} out /(ppm) | ΔC (ppm) |
|---|---|---|---|---|---|---|---|---|---|
| 10%Ag/Al2O3 | 557 | 1,56 | 6,99 | 3,60 | 3,21 | 0,39 | 5 | 305 | 252 |
| 20%Ag/Al2O3 | 560 | 2,99 | 14,35 | 6,25 | 3,74 | 2,51 | 17 | 366 | 194 |
| 35%Ag/Al2O3 | 555 | 3,0 | 14,27 | 6,77 | 3,67 | 3,1 | 22 | 345 | 210 |
| 20%Ag/SiO2 | 585 | 1,89 | 9,56 | 0,95 | 1,20 | -0,25 | -3 | 550 | 35 |
| 20%Ag-Co (1.2/1)/Al2O3 | 566 | 6,5 | 31,73 | 13,81 | 4,50 | 9,31 | 29 | 366 | 200 |
| 20%Ag-Co (1.2/1)Zr-Al2O3 | 555 | 12,0 | 58,84 | 23,59 | 6,30 | 17,29 | 29 | 380 | 175 |
| 10%Ag-Co(1/1)/Al2O3 | 555 | 3,0 | 14,71 | 7,11 | 3,64 + 0,11 | 3,36 | 23 | 350 | 205 |
| 5%Ag-Co (1/1)/Al2O3 | 580 | 3,0 | 15,38 | 6,57 | 3,29 + 0,05 | 3,23 | 21 | 493 | 87 |
| 2.5%Ag-Co (1/1)/Al2O3 | 555 | 2,66 | 13,04 | 3,93 | 2,82 + 0,01 | 1,10 | 8 | 545 | 10 |
| 20%Ag-Ni (2/1)/Al2O3 | 585 | 3,0 | 14,91 | 6,82 | 3,06 + 0,10 | 3,66 | 25 | 375 | 210 |
| 20%Ag-Mn (1/1)/Al2O3 | 580 | 3,02 | 15,34 | 7,95 | 4,37 | 3,58 | 23 | 380 | 200 |
| 20%Ag-Zn(1/1)/Al2O3 | 605 | 3,0 | 15,56 | 7,19 | 4,08 | 3,11 | 20 | 385 | 220 |
| 30%Ag-Cu (1/1)/Al2O3 | 565 | 12,0 | 59,90 | 19,93 | 4.26 | 15,67 | 26 | 440 | 125 |
| 10%Ag-Cu (1/1)/Al2O3 | 555 | 3,0 | 14,27 | 6,37 | 3,24 | 3,13 | 22 | 350 | 205 |
| 20%Ag-Fe ((2/1)/Zr-Al2O3 | 580 | 3,02 | 15,34 | 8,34 | 4,53 | 3,81 | 25 | 355 | 225 |
| 20%Ag-Ce (2/1)/Al2O3 | 587 | 3,02 | 15,52 | 7,13 | 3,57 | 3,56 | 23 | 417 | 170 |
| 20%Ag-Ce (1/2)/Al2O3 | 570 | 3,0 | 14,65 | 5,73 | 3,12 | 2,61 | 18 | 404 | 166 |
| 15%Ag-Pr (1/1)Zr-Al2O3 | 580 | 3,74 | 18,74 | 8,43 | 4,68 | 3,75 | 20 | 390 | 190 |
| 20%Ag-Bi(3/1)Al2O3 | 580 | 3,02 | 15,34 | 5,91 | 2,97 | 2,94 | 19 | 400 | 180 |
| 20%Ag-ZrO2 | 560 | 3,02 | 14,53 | 3,92 | 2,22 | 1,70 | 12 | 437 | 123 |
| 20%Ag-Sn (2/1)/Al2O3 | 545 | 3,0 | 14,1 | 6,60 | 5,48 | 1,12 | 8 | 352 | 193 |
| 20%Ag-Ba (2/1)/Zr-Al2O3 | 575 | 3,0 | 14,78 | 7,38 | 6,69 | 0,69 | 5 | 355 | 220 |

| | | | | | | | | | |
|---|---|---|---|---|---|---|---|---|---|
| Comments: C NO2 in - inlet concentration NO2, ppm; t ads - time of adsorption, hours; AC in - total amount of NO2 for adsorption time; AC dif - total difference between inlet NO2 and outlet NOx concentration; AD - total desorbed NOx amount, including NOx desorbed before desorption experiment; Conversion NO2 = (AC dif - AC des) / AC in x 100%, Δ AC = (ACdif - AD) / mmol CNOx out - final outlet NOx concentration after time of adsorption, Δ C = (CNO2 in - CNOx out) / ppm. The ratio e.g. (1/1) in parentheses is molar ratio of silver to second component. | | | | | | | | | |

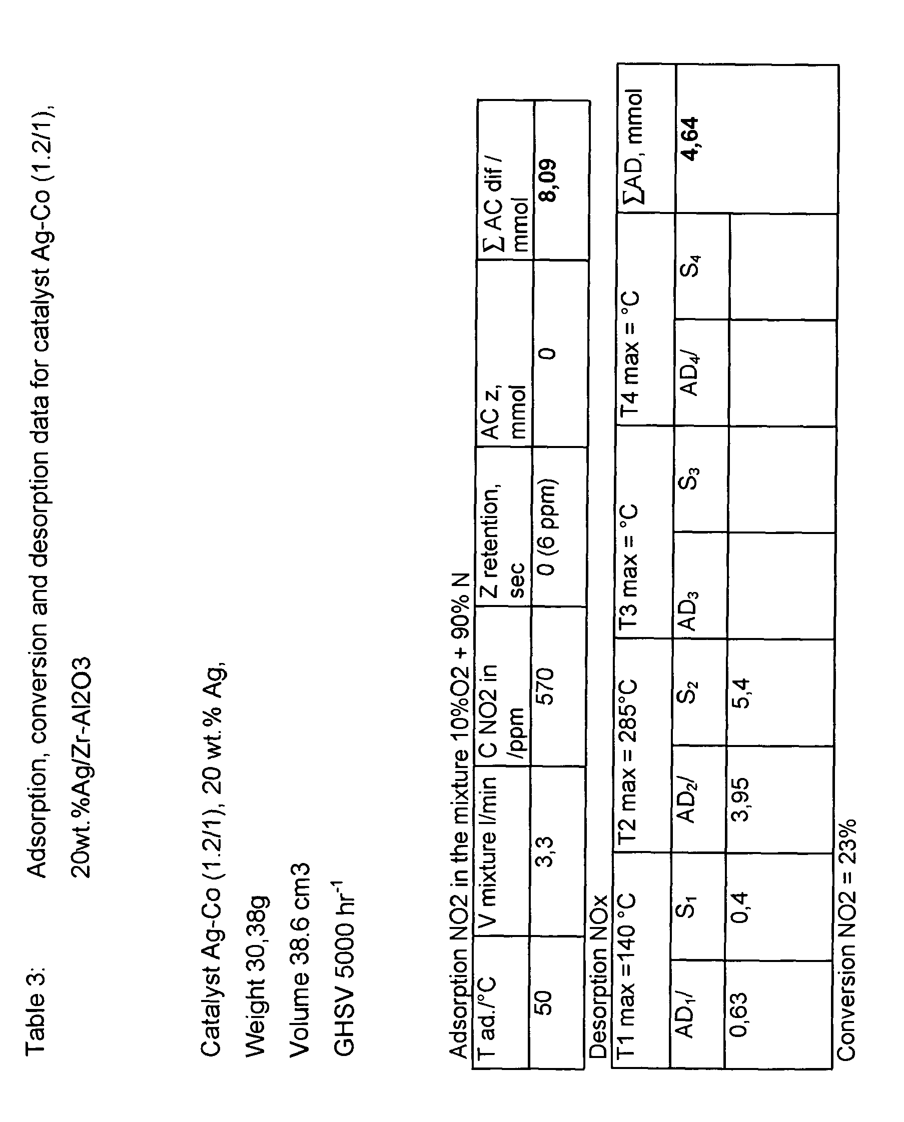

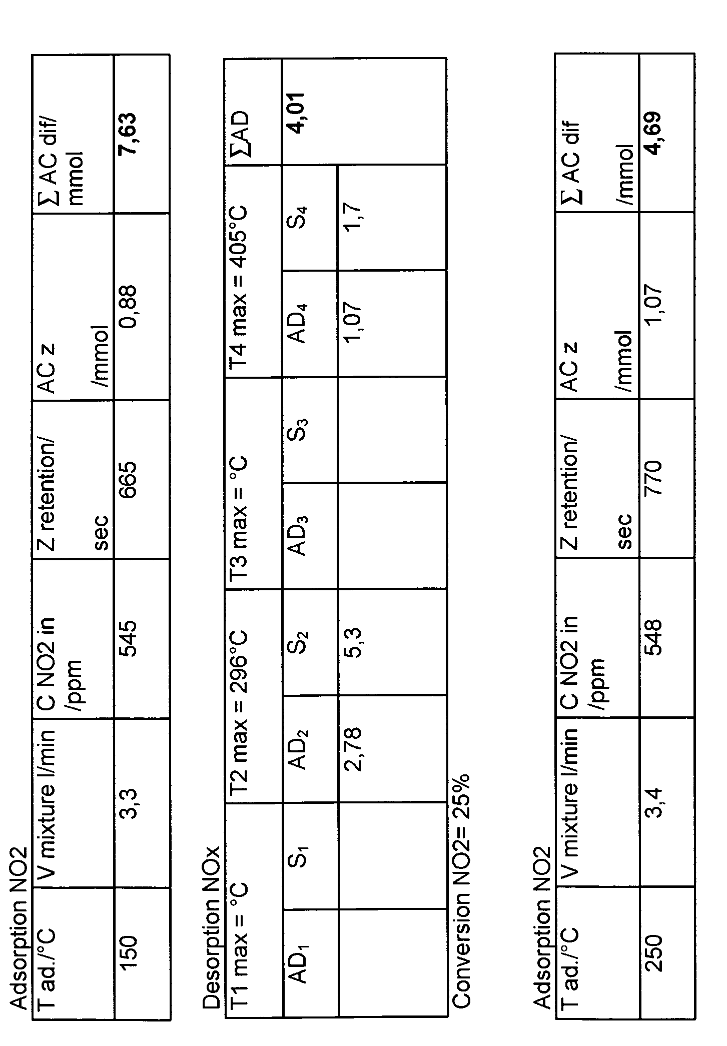

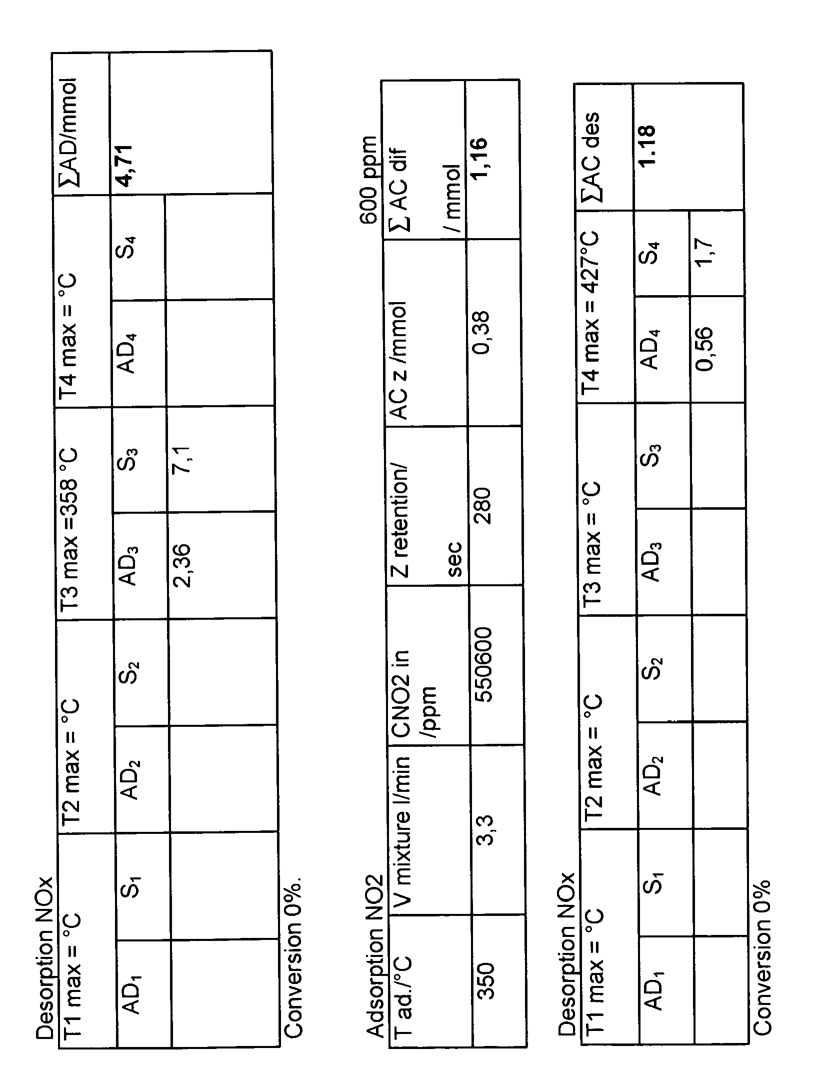

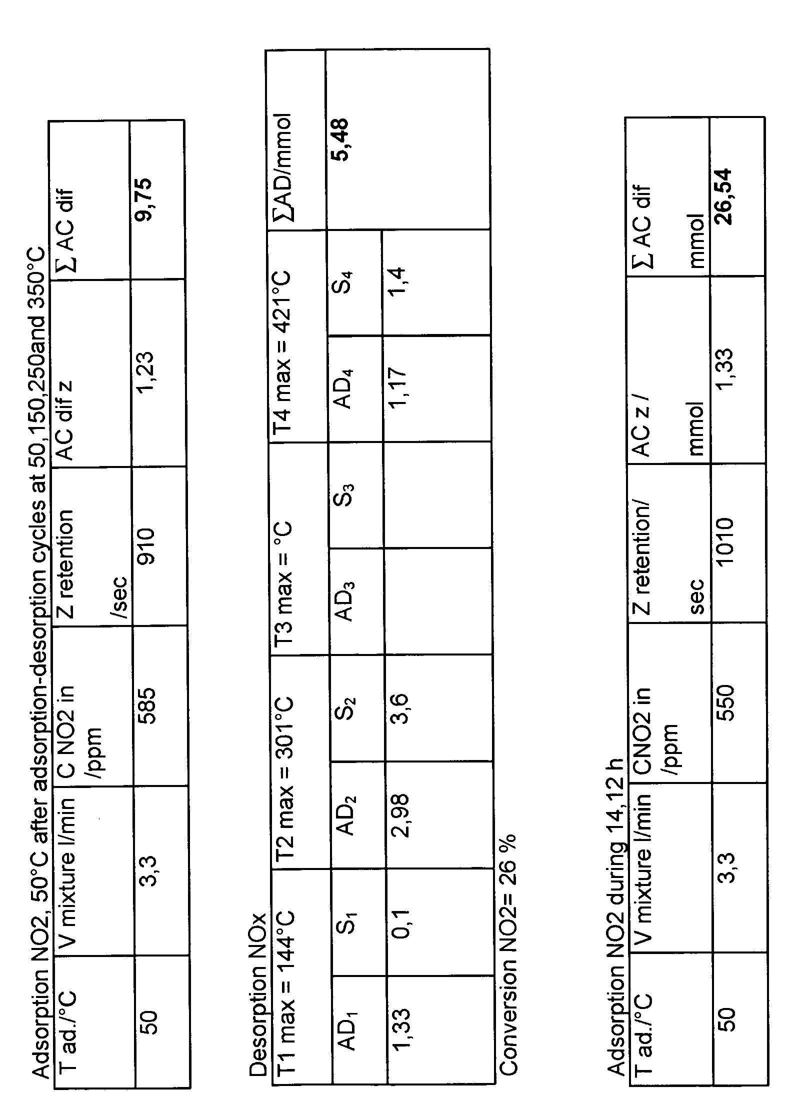

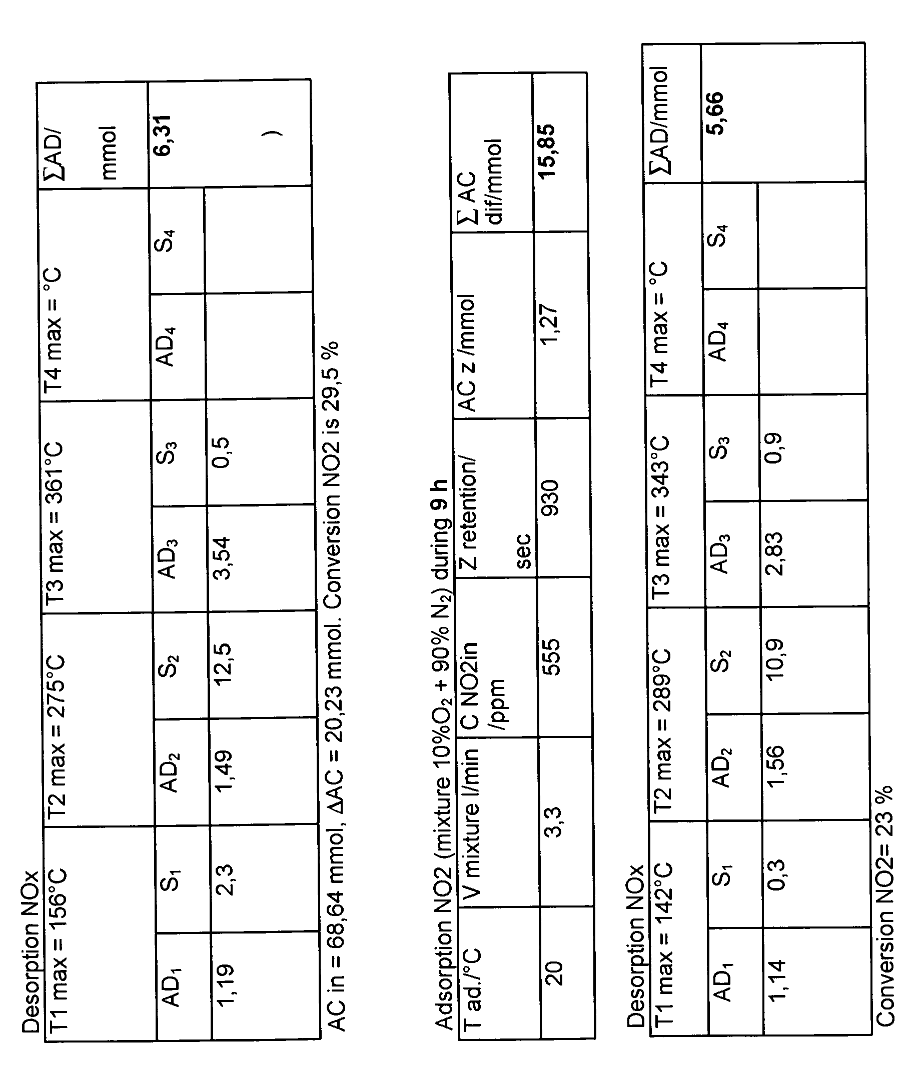

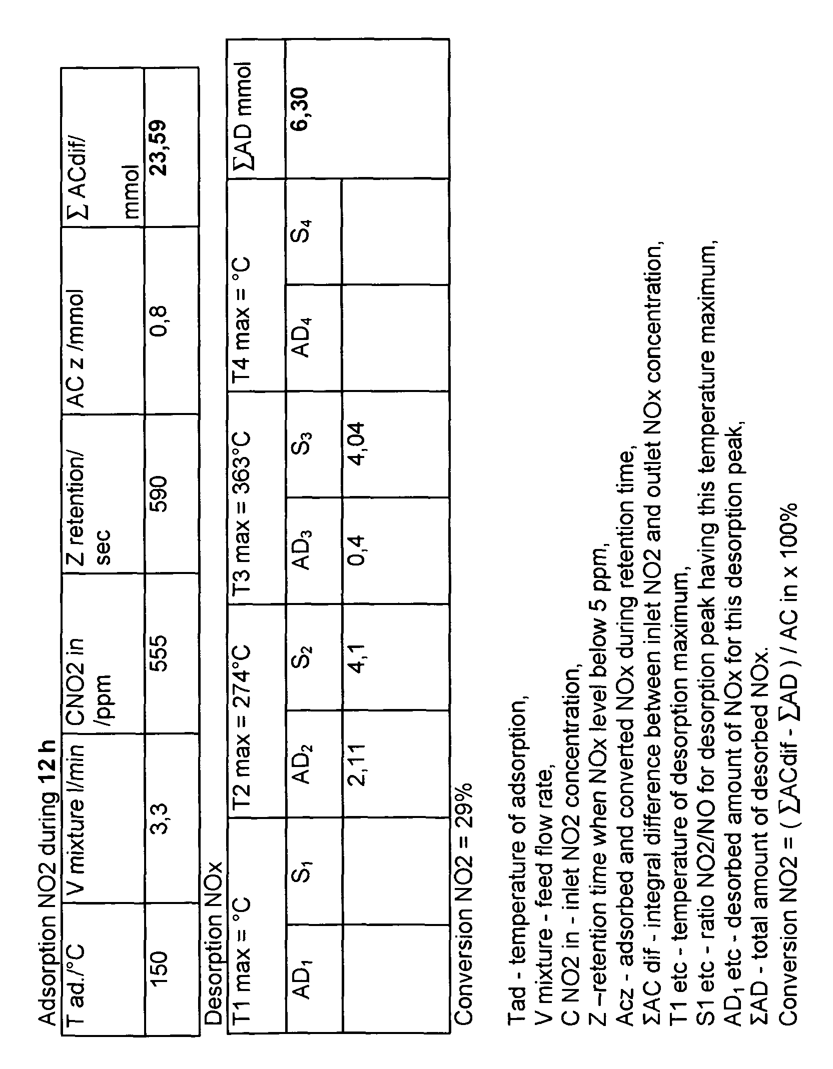

**Table 4.1 NOx - adsorption / desorption on catalyst Ag-Co(1.2/1), 20 wt.% Ag at Tads = 50°C**

| Mixture 9,5%O₂+N₂+ | CNOx in / (ppm) | t ads / h | AC in / mmol | ACdif / mmol | AD / mmol | Δ AC / mmol | CNOx out / (ppm) | Δ C (ppm) |
|---|---|---|---|---|---|---|---|---|
| NO | 785 | 1,2 | 8,15 | 1,56 | 1,50 | 0.06 | 763 | 25 |
| NO₂, 6 hours | 570 | 6,0 | 29,50 | 16,72 | 6,77 | 9,55 | 310 | 260 |
| NO2, 3 hours | 585 | 3,0 | 15,04 | 9,66 | 5,66 | 4,00 | 305 | 280 |
| NO+NO₂ | 780 + 535 | 3,0 | 33,81 | 5,47 | 3,36 (+0,2) | 1,91 | 1198 | 117 |
| NO2+5%CO₂+5%H₂O | 570 | 3,14 | 15,36 | 8,22 | 5,61 (+0,26) | 2,35 | 570 | 0 |
| NO+NO2 +5%CO₂+5%H₂O | 770 + 500 | 3,15 | 34,29 | 7,57 | 5,32 (+0,47) | 1,78 | 1280 | 0 |

| | | | | | | | | |
|---|---|---|---|---|---|---|---|---|
| Comments: tads- time of adsorption, AC in - inlet NOx concentration, AC dif - integral difference between inlet NO2 (NO, NOx) and outlet NOx concentration for the time of adsorption, AD - total desorbed amount of NOx , NOx removed before desorption experiment is in parentheses , Δ AC = (ACdif - AC des), mmol - assumed as converted amount, Δ C = (C NOx in - C NOx out ) / ppm- difference between NOx inlet and outlet concentrations at final point of adsorption. | | | | | | | | |

**Table 4.2 NOx - adsorption / desorption on catalyst Ag-Co (1.2/1), 20 wt.% Ag at Tads = 150°C.**

| Mixture 9,5%O₂+N₂+ | CNOx in / (ppm) | t ads / h | AC in / mmol | ACdif / mmol | AD / mmol | Δ AC / mmol | CNOx out / (ppm) | Δ C (ppm) |
|---|---|---|---|---|---|---|---|---|
| NO | 795 | 1,15 | 7,90 | 1,46 | 1,09 | 0,37 | 780 | 15 |
| NO₂ | 566 | 6,5 | 31,53 | 13,81 | 4,5 | 9,3 | 366 | 200 |
| NO+NO₂ | 780 + 530 | 3,0 | 33,81 | 5,47 | 3,36 (+0,2) | 1,81 | 1198 | 117 |
| NO2+5%CO₂+5%H₂O | 560 | 3,31 | 15,89 | 6,05 | 3,93 (+0,14) | 1,98 | 560 | 0 |
| NO+NO2+5%CO₂+5%H₂O | 790+550 | 3,12 | 35,81 | 3,95 | 3,38 (+0,2) | 0,37 | 1340 | 0 |

**Table 4.3 NOx - adsorption / desorption on catalyst Ag-Co(1.2/1), 20 wt.% Ag at Tads = 250°C.**

| Mixture | CNOx in / (ppm) | t ads / h | AC in / mmol | Acdif / mmol | AD / mmol | Δ AC / mmol | CNOx out / (ppm) | Δ C (ppm) |
|---|---|---|---|---|---|---|---|---|
| 9,5%O₂⁺N₂⁺ | | | | | | | | |
| NO | 785 | 3,11 | 21,13 | 3,91 | 1,78 (+2,0) | 0,13 | 745 | 40 |
| NO₂ | 540 | 5,5 | 25,45 | 5,50 | 1,53 (+2,93) | 1,04 | 513 | 27 |
| NO+NO₂ | 770 + 550 | 1,66 | 18,78 | 4,74 | 2,0 (+) | - | 1070 | 250 |
| NO2+5%CO₂+5%H₂O | 567 | 2,71 | 13,17 | 2,84 | 1,78 (+1,17) | 0 | 565 | 0 |
| NO+NO2+5%CO₂+5%H₂O | 770+560 | 1,1 | 12,54 | 1,30 | 1,10 (+0,27) | 0 | 1320 | 10 |

**Table 4.4 NOx - adsorption / desorption on catalyst Ag-Co(1.2/1), 20 wt.% Ag at Tads = 350°C.**

| Mixture | CNOx in / (ppm) | t ads / h | AC in/ mmol | AC dif / mmol | AD / mmol | Δ AC / mmol | CNOx out / (ppm) | ΔC(ppm) |
|---|---|---|---|---|---|---|---|---|
| 9,5%O₂+N₂+ | | | | | | | | |
| NO | 775 | 0,44 | 2,93 | 0,82 | 0,30 | - | 765 | 10 |
| NO₂ | 540 | 0,43 | 2,00 | 0,95 | 0,43 | - | 539 | 0 |
| NO+NO₂ | 790+570 | 1,38 | 16,06 | 1,66 | 0,34 (+0,65) | 0,67 | 1300 | 60 |
| NO2+5%CO₂+5%H₂O | 560 | 0,24 | 1,17 | 0,42 | 0,13 (+) | - | 560 | 0 |
| NO+NO2+5%CO₂+5%H₂O | 780 + 580 | 1,48 | 17,22 | 1,29 | 0,21 (+) | - | 1300 | 60 |

**Table 5.1 NOx- adsorption/desorption on the catalyst Ag-Pr(1/1), 15wt%Ag/ZrO2-Al2O3 at T= 50°C.**

| Mixture | CNOx in / (ppm) | t ads / h | AC in / mmol | ACdif /mmol | AD / mmol | ΔAC / mmol | CNOx out / (ppm) | ΔC(ppm) |
|---|---|---|---|---|---|---|---|---|
| NO2 | 555 | 3.05 | 14.62 | 6.78 | 4.99 | 1.79 | 470 | 85 |
| NO₂+5%CO₂+5%H₂O | 565 | 3.0 | 14.64 | 10.15 | 7.14 | 2.91 | 255 | 310 |
| NO+NO₂+5%CO₂+5%H₂O | 730+550 | 3.0 | 33.17 | 7.82 | 5.75 | 2.07 | 1030 | 250 |

**Table 5.2 NOx- adsorption/ desorption on the catalyst Ag-Pr(1/1), 15wt% Ag/ZrO2-Al2O3 at T= 150°C.**

| Mixture | CNOx in / (ppm) | t ads / h | AC in / mmol | ACdif /mmol | AD / mmol | ΔAC / mmol | CNOx out / (ppm) | ΔC (ppm) |
|---|---|---|---|---|---|---|---|---|
| NO2 | 580 | 3.74 | 18.74 | 8.43 | 4.68 | 3.75 | 390 | 190 |
| NO₂+5%CO₂+5%H₂O | 565 | 3.25 | 15.86 | 5.1 | 4.1 | 1.0 | 405 | 160 |
| NO+NO₂+5%CO₂+5%H₂O | 730+600 | 3.0 | 34.47 | 5.37 | 3.95 | 1.42 | 1280 | 50 |

## Claims

1. A method for the low-temperature NOx reduction, said method comprising:
a first step of NO oxidation to NO₂ with the help of a catalyst and adsorption composition comprising silver and at least one second metal oxide component; and
a second step of a selective conversion of NO₂ at a temperature in the range of 20°C to 200°C with the help of said catalyst and adsorption composition;
wherein each of said first step and said second step is performed without gaseous reductant.

2. The method according to claim 1, **characterized in that** said selective conversion is carried out at a temperature in the range of 50°C to 150°C.

3. A method according to claim 1 or 2, **characterized in that** said catalyst and adsorption composition comprises silver as oxide.

4. The method according to anyone of the claims 1 to 3, **characterized in that** said first step is carried out at a temperature of about 250°C to about 350°C.

5. The method according to anyone of the claims 1 to 4, **characterized in that** the converted NO₂ was produced by said NO oxidation.

6. The method according to anyone of claims 1 to 5, **characterized in that** said composition is regenerated in air and/or in diesel exhaust at about 450°C to about 600°C.

7. The method according to anyone of claims 1 to 6, **characterized in that** NOx and particulate matter, especially soot, are simultaneously removed.

8. The method according to claim 7, **characterized by** soot oxidation using NO₂ release from said composition during desorption of adsorbed NOx as NO₂, the desorption being preferably carried out at about 250°C to about 400°C.

9. The method according to claim 7 or 8, **characterized in that** NOx is adsorbed using said composition at low temperatures, preferably at about 20°C to about 200°C, and that soot oxidation takes place on the same composition at about 250°C to about 400°C.

## Patentansprüche

1. Verfahren zur NOx-Reduktion bei niedrigen Temperaturen, wobei das Verfahren Folgendes umfasst:
einen ersten Schritt der NO-Oxidation auf NO₂ mit Hilfe einer Katalysator- und Adsorptionszusammensetzung, die Silber und mindestens eine zweite Metalloxidkomponente umfasst; und
einen zweiten Schritt einer selektiven Umwandlung von NO₂ bei einer Temperatur in einem Bereich von 20°C bis 200°C mit Hilfe der Katalysator- und Adsorptionszusammensetzung;
wobei sowohl der erste Schritt als auch der zweite Schritt ohne gasförmiges Reduktionsmittel durchgeführt werden.

2. Verfahren nach Anspruch 1, **dadurch gekennzeichnet, dass** die selektive Umwandlung bei einer Temperatur in einem Bereich von 50°C bis 150°C durchgeführt wird.

3. Verfahren nach Anspruch 1 oder 2, **dadurch gekennzeichnet, dass** die Katalysator- und Adsorptionszusammensetzung Silber als Oxid umfasst.

4. Verfahren nach einem der Ansprüche 1 bis 3, **dadurch gekennzeichnet, dass** der erste Schritt bei einer Temperatur von ca. 250°C bis ca. 350°C durchgeführt wird.

5. Verfahren nach einem der Ansprüche 1 bis 4, **dadurch gekennzeichnet, dass** das umgewandelte NO₂ durch die NO-Oxidation erzeugt wurde.

6. Verfahren nach einem der Ansprüche 1 bis 5, **dadurch gekennzeichnet, dass** die Zusammensetzung in Luft und/oder Dieselabgas bei ca. 450°C bis ca. 600°C regeneriert wird.

7. Verfahren nach einem der Ansprüche 1 bis 6, **dadurch gekennzeichnet, dass** das NOx und die Partikel, insbesondere Ruß, gleichzeitig entfernt werden.

8. Verfahren nach Anspruch 7, **gekennzeichnet durch** Rußoxidation unter Verwendung von NO₂-Abgabe aus der Zusammensetzung bei der Desorption von adsorbiertem NOx als NO₂, wobei die Desorption vorzugsweise bei ca. 250°C bis ca. 400°C durchgeführt wird.

9. Verfahren nach Anspruch 7 oder 8, **dadurch gekennzeichnet, dass** NOx unter Verwendung der Zusammensetzung bei niedrigen Temperaturen, vorzugsweise bei ca. 20°C bis ca. 200°C, adsorbiert wird und dass Rußoxidation an der gleichen Zusammensetzung bei ca. 250°C bis ca. 400°C erfolgt.

## Revendications

1. Méthode pour la réduction des NOₓ à basse température, ladite méthode comprenant :
une première étape d'oxydation de NO en NO₂ à l'aide d'une composition catalytique d'adsorption comprenant de l'argent et au moins un deuxième composant d'oxyde métallique ; et
une deuxième étape de conversion sélective du NO₂ à une température de l'ordre de 20°C à 200°C à l'aide de ladite composition catalytique d'adsorption ;
chacune desdites première et deuxième étapes étant effectuée sans agent réducteur gazeux.

2. Méthode selon la revendication 1, **caractérisée en ce que** ladite conversion sélective est effectuée à une température de l'ordre de 50°C à 150°C.

3. Méthode selon la revendication 1 ou 2, **caractérisée en ce que** ladite composition catalytique d'adsorption comprend de l'argent en tant qu'oxyde.

4. Méthode selon l'une quelconque des revendications 1 à 3, **caractérisée en ce que** ladite première étape est effectuée à une température entre environ 250°C et environ 350°C.

5. Méthode selon l'une quelconque des revendications 1 à 4, **caractérisée en ce que** le NO₂ converti a été produit par ladite oxydation de NO.

6. Méthode selon l'une quelconque des revendications 1 à 5, **caractérisée en ce que** ladite composition est régénérée dans de l'air et/ou dans un échappement diesel entre environ 450°C et environ 600°C.

7. Méthode selon l'une quelconque des revendications 1 à 6, **caractérisée en ce que** le NOₓ et des matières particulaires, en particulier de la suie, sont éliminés simultanément.

8. Méthode selon la revendication 7, **caractérisée par** l'oxydation de la suie en utilisant du NO₂ libéré par ladite composition au cours de la désorption du NOₓ adsorbé sous forme de NO₂, la désorption étant de préférence effectuée entre environ 250°C et environ 400°C.

9. Méthode selon la revendication 7 ou 8, **caractérisée en ce que** le NOₓ est adsorbé en utilisant ladite composition à basses températures, de préférence entre environ 20°C et environ 200°C, et **en ce que** l'oxydation de la suie a lieu sur la même composition entre environ 250°C et environ 400°C.
